(19)

Europäisches
Patentamt
European
Patent Office
Office européen
des brevets

(11) **EP 1 811 392 A1**

(12) **EUROPEAN PATENT APPLICATION**
published in accordance with Art. 158(3) EPC

(43) Date of publication:
**25.07.2007 Bulletin 2007/30**

(51) Int Cl.:
*G06F 13/10* (2006.01)   *G06F 12/00* (2006.01)
*G06F 3/06* (2006.01)

(21) Application number: **04792086.3**

(22) Date of filing: **06.10.2004**

(86) International application number:
**PCT/JP2004/014730**

(87) International publication number:
**WO 2006/038286 (13.04.2006 Gazette 2006/15)**

(84) Designated Contracting States:
**DE FR GB**

(71) Applicants:
• **Fujitsu Ltd.**
**Kawasaki-shi, Kanagawa 211-8588 (JP)**
• **Fujitsu Peripherals Limited**
**Kato-gun,**
**Hyogo 673-1447 (JP)**

(72) Inventors:
• **TANAKA, Hideyuki**
**Kawasaki-shi, Kanagawa 2118588 (JP)**
• **TERAI, Sachiko**
**Kawasaki-shi, Kanagawa 2118588 (JP)**
• **IWATANI, Sawao**
**Kawasaki-shi, Kanagawa 2118588 (JP)**
• **FUJIMOTO, Fumikazu**
**Kato-gun, Hyogo 6731447 (JP)**

• **HAMAGUCHI, Shinji**
**Hyogo, 6731447 (JP)**
• **HASEGAWA, Hideaki**
**Hyogo, 6731447 (JP)**
• **MATSUZAKI, Noriaki**
**Hyogo,6731447 (JP)**
• **OHASHI, Hiroki**
**Hyogo, 6731447 (JP)**
• **USUNAGA, Keiko**
**Hyogo, 6731447 (JP)**
• **TAKEUCHI, Souichi**
**Hyogo, 6731447 (JP)**

(74) Representative: Stebbing, Timothy Charles
**Haseltine Lake**
**Lincoln House**
**300 High Holborn**
**London WC1V 7JH (GB)**

(54) **SYSTEM ENVIRONMENT SETTING SUPPORTING PROGRAM, SYSTEM ENVIRONMENT SETTING SUPPORTING METHOD, AND SYSTEM ENVIRONMENT SETTING SUPPORTING DEVICE**

(57)    Setting in which the reliability of and the load on a disk array are taken into consideration can be performed easily.

A logical volume requirement acquisition section (1a) acquires a logical volume requirement (5). An applied technique determination section (1b) then determines an applied technique for improving at least one of reliability and processing speed according to the logical volume requirement. A logical volume setting section (1c) then outputs instructions to generate a logical volume which is made up of a plurality of disk drives and which is used for realizing the determined applied technique and instructions to set an environment in which a server (3) accesses the logical volume by using the applied technique to the server (3) and a disk array (4).

FIG. 1

EP 1 811 392 A1

**Description**

TECHNICAL FIELD

This invention relates to a system environment setting support program, a system environment setting support method, and a system environment setting support apparatus for supporting the setting of an environment for a network system and, more particularly, to a system environment setting support program, a system environment setting support method, and a system environment setting support apparatus for setting an environment for a network system including a disk array system.

BACKGROUND ART

With the progress of computerization of business transaction in enterprises, the amount of data handled in these enterprises increases. In addition, there are cases where common data is used in plural pieces of business. This has complicated data management. Accordingly, centralized management of data has recently been exercised at predetermined places on networks. A technique used for such centralized management of data is, for example, a storage area network (SAN). With the SAN, a storage device for storing a large amount of data is prepared and a server and the storage device are connected via a fiber channel.

By the way, if centralized management of data is exercised by using a storage device, speed at which the storage device is accessed has a great influence on the processing efficiency of the entire system. Furthermore, if a failure occurs in the storage device in which data is stored and the data cannot be taken out, all pieces of business are stopped.

Therefore, if centralized management of data is exercised by the SAN, not only a technique for increasing speed at which the storage device is accessed but also a technique for increasing the reliability of the storage device are used. For example, a redundant array of independent disks (RAID) is used as a technique for increasing speed at which the storage device is accessed and a technique for increasing the reliability of the storage device. Storage devices for which the RAID technique can be used are referred to as a disk array.

With the RAID, various techniques such as striping by which distributed writing to a plurality of drives and distributed reading from a plurality of drives are performed and mirroring by which the same piece of data is written to a plurality of drives are combined and are used.

With the RAID, however, various techniques are combined for controlling a plurality of drives, so the setting of an operation environment is complicated. Accordingly, a technique for automatically configuring a RAID controller is devised (see, for example, patent document 1).

In addition, a technique for easing configuration change operation by visually representing the configuration of a disk array subsystem is devised (see, for example, patent document 2).

Patent Document 1: Japanese Unexamined Patent Publication No. 2000-20245

Patent Document 2: Japanese Unexamined Patent Publication No. 9-292954

DISCLOSURE OF THE INVENTION

PROBLEMS TO BE SOLVED

With a disk array connected as the SAN, however, expert knowledge of the entire network including the SAN and the RAID is necessary for performing proper setting. A user who is short of knowledge cannot perform setting.

To be concrete, many setting operations must be performed on a disk array connected as the SAN, a fiber channel (FC) switch, and a server so that the server can access a logical volume in the disk array. An advanced knowledge is needed for performing consistent setting on these components which relate to one another. The cost of obtaining such knowledge is high. In addition, this setting is complicated, so a mistake tends to occur. Furthermore, to maintain reliability, configuration must be designed with redundancy and performance taken into consideration. This requires great skill.

These factors contribute to the difficulty of changing the configuration of a storage system or extending a storage system. That is to say, the following problems exist.

The configuration of the storage system cannot be designed easily.

To design a configuration with redundancy and performance taken into consideration, a copious knowledge of specifications for the disk array and the SAN is required. Therefore, a design cannot be prepared easily.

The procedure and operations for setting a designed configuration on the actual components are complicated.

Many setting operations must be performed on the disk array, the FC switch, and the server, so a mistake tends to occur. In addition, a mechanism for detecting a setting mistake is not fully established.

The present invention was made under the background circumstances described above. An object of the present invention is to provide a system environment setting support program, a system environment setting support method, and a system environment setting support apparatus by which setting in which the reliability of and the load on a disk array are taken into consideration can easily be performed.

MEANS TO SOLVE THE PROBLEMS

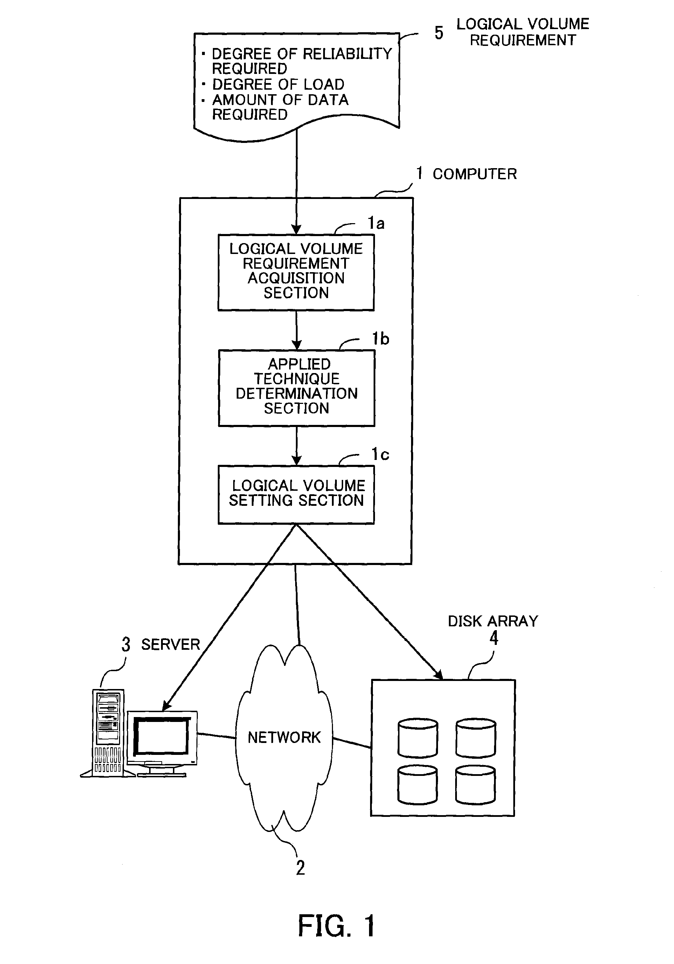

In order to solve the above problems, a system environment setting support program shown in Fig. 1 is provided by the present invention. The system environment setting support program is used for supporting the setting of an environment in which a server 3 accesses a disk array 4. The system environment setting support program can make each component of a computer 1 shown in Fig. 1 perform the following process.

A logical volume requirement acquisition section 1a acquires a logical volume requirement 5 in which the degree of reliability required, the degree of a load, and the amount of data required are designated. An applied technique determination section 1b determines an applied technique for improving at least one of reliability and processing speed according to the logical volume requirement 5. A logical volume setting section 1c outputs instructions to generate a logical volume which is made up of a plurality of disk drives and which is used for realizing the determined applied technique and instructions to set an environment in which the server 3 accesses the logical volume by using the applied technique to the server 3 and the disk array 4.

With the computer 1 which executes the above system environment setting support program, the logical volume requirement acquisition section 1a acquires the logical volume requirement 5. The applied technique determination section 1b then determines an applied technique for improving at least one of reliability and processing speed according to the logical volume requirement 5. The logical volume setting section 1c then outputs the instructions to generate the logical volume which is made up of the plurality of disk drives and which is used for realizing the determined applied technique and the instructions to set the environment in which the server 3 accesses the logical volume by using the applied technique to the server 3 and the disk array 4.

EFFECT OF THE INVENTION

In the present invention, an applied technique for improving at least one of reliability and processing speed is determined according to the degree of reliability required, the degree of a load, and the amount of data required and instructions to generate a logical volume and instructions to set an access environment are given. As a result, only by designating the degree of reliability required, the degree of a load, and the amount of data required, a user can generate an appropriate logical volume and build an environment in which the logical volume is accessed.

The above and other objects, features and advantages of the present invention will become apparent from the following description when taken in conjunction with the accompanying drawings which illustrate preferred embodiments of the present invention by way of example.

BRIEF DESCRIPTION OF THE DRAWINGS

[Fig. 1] A schematic view showing the present invention applied to an embodiment.
[Fig. 2] A view showing the configuration of a system according to the embodiment of the present invention.
[Fig. 3] A view showing an example of the hardware configuration of a management server.
[Fig. 4] A view showing an example of the hardware configuration of a server.
[Fig. 5] A view showing the hardware configurations of each FC switch and each disk array.
[Fig. 6] A block diagram showing an environment setting function of the management server.
[Fig. 7] A block diagram showing the function of a server.
[Fig. 8] A view showing connection relationships between servers and disk drives.
[Fig. 9] A view showing an example of the data structure of physical connection information.
[Fig. 10] A view showing an example of the data structure of a RAID determination table.
[Fig. 11] A view showing an example of the data structure of a drive determination table.
[Fig. 12] A flow chart showing the procedure for a logical volume generation process.
[Fig. 13] A flow chart showing the procedure for an automatic structure determination process.
[Fig. 14] A view showing an example of the data structure of RAID group structure information.
[Fig. 15] A view showing grouping indicated in the RAID group structure information.

[Fig. 16] A view showing an example of the data structure of logical volume structure information.

[Fig. 17] A view showing how RAID groups are associated with logical volumes.

[Fig. 18] A view showing an example of a screen on which a logical volume requirement is inputted.

[Fig. 19] A view showing an example of a result display screen.

[Fig. 20] A view showing the procedure for a logical volume addition setting process.

[Fig. 21] A schematic view showing the logical volume addition setting process.

[Fig. 22] A view showing an example of the data structure of affinity group information.

[Fig. 23] A view showing an example of the data structure of multipath structure data.

[Fig. 24] A view showing an example of the data structure of mirror volume structure data.

BEST MODE FOR CARRYING OUT THE INVENTION

An embodiment of the present invention will now be described with reference to the drawings. An overview of the present invention applied to an embodiment will be given first and the concrete contents of the embodiment will then be described.

Fig. 1 is a schematic view showing the present invention applied to an embodiment. The computer 1 provided with the present invention includes the logical volume requirement acquisition section 1a, the applied technique determination section 1b, and the logical volume setting section 1c for supporting the setting of an environment in which the server 3 accesses the disk array 4 connected thereto via a network 2.

The logical volume requirement acquisition section 1a acquires the logical volume requirement 5 in which the degree of reliability required, the degree of a load (necessity of high-speed data access), and the amount of data required are designated. The logical volume requirement 5 is set by, for example, operation input from a user.

If a logical volume is used as a database regarding, for example, the contents of the settlement of electronic commerce, then high reliability is required. Conversely, if a logical volume is used for storing data, such as data stored in an electronic bulletin board for employees of a company, the loss of which has little influence on business, then low reliability is justifiable.

The degree of a load on a logical volume used for storing, for example, information to be retrieved by a search engine is set to a great value because speed at which the logical volume is accessed has a great influence on processing speed.

The applied technique determination section 1b determines an applied technique for improving at least one of reliability and processing speed according to the logical volume requirement 5. For example, if high reliability is required, then the applied technique determination section 1b determines that the mirroring technique or the like suitable for improving reliability is applied. If the degree of a load is high, then the applied technique determination section 1b determines that the striping technique or the like suitable for improving processing speed is applied.

The logical volume setting section 1c outputs instructions to generate a logical volume which is made up of a plurality of disk drives and which is used for realizing the determined applied technique and instructions to set an environment in which the server 3 accesses the logical volume by using the applied technique to the server 3 and the disk array 4.

With the computer 1 which executes the above system environment setting support program, the logical volume requirement acquisition section 1a acquires the logical volume requirement 5. The applied technique determination section 1b then determines an applied technique for improving at least one of reliability and processing speed according to the logical volume requirement 5. The logical volume setting section 1c then outputs the instructions to generate the logical volume which is made up of the plurality of disk drives and which is used for realizing the determined applied technique and the instructions to set the environment in which the server 3 accesses the logical volume by using the applied technique to the server 3 and the disk array 4.

This makes it easy to build a logical volume in a disk array and to set an environment in which a server accesses the logical volume built. As a result, even a user who is not familiar with a technique for increasing data access speed or reliability by the use of a disk array can set an environment for a system to which these techniques are applied.

The function of automatically setting an environment in which such a storage device is accessed is referred to as a storage provisioning function.

By the way, a system to which the present invention is applied is, for example, the SAN. Furthermore, the RAID can be used as a technique for increasing data access speed or reliability by the use of a disk array. If the storage provisioning function is applied to disk units (disk array) for which the RAID can be used, it is possible to make a server or the disk array perform a logical volume setting process or a resource provisioning process by a remote operation from a management server which manages a network system.

When the management server performs the function of automatically building a logical volume in the disk array, the management server performs the following process. The logical volume built is put into a state in which it can be used in the system as a storage pool.

When a user sets a logical volume, he/she need only input the degree of reliability required, the degree of a load, and the amount of data required. The management server determines logical volume structure which satisfies the logical volume requirement inputted and automatically set a logical volume in the disk array. The logical volume generated is managed as a volume included in the storage pool.

In addition, the management server uses the concepts of "domain" and "group" for performing the resource provisioning function by which a logical volume included in the pool is assigned to a server by one action.
With the resource provisioning function, the uniformity of the physical connection of the SAN is guaranteed by a server domain. To be concrete, the management server performs the following process.

1. The management server generates a server domain.
2. The management server adds the server to the server domain.
3. The management server generates a storage domain.
4. The management server associates the server domain with the storage domain. At this time the management server defines the number of redundant paths to be secured in SAN connection with the server as an attribute.
5. The management server adds a storage unit to the storage domain. At this time whether a physical connection path between the storage unit and the server meets the number of redundant paths previously defined is checked. If the physical connection path between the storage unit and the server does not meet the number of redundant paths previously defined, then the management server cannot add the storage unit to the storage domain.

With the resource provisioning function, servers used for carrying out the same business are managed as a server group and a logical volume is assigned to a storage group connected to the server group. To be concrete, the management server performs the following process.

1. The management server generates a server group.
2. The management server integrates m (m is a natural number) servers into a server group.
3. The management server generates a storage group.
4. The management server integrates n (n is a natural number) logical volumes included in the storage pool into a storage group.
5. The management server automatically performs a setting process on the disk array, an FC switch, and each server.

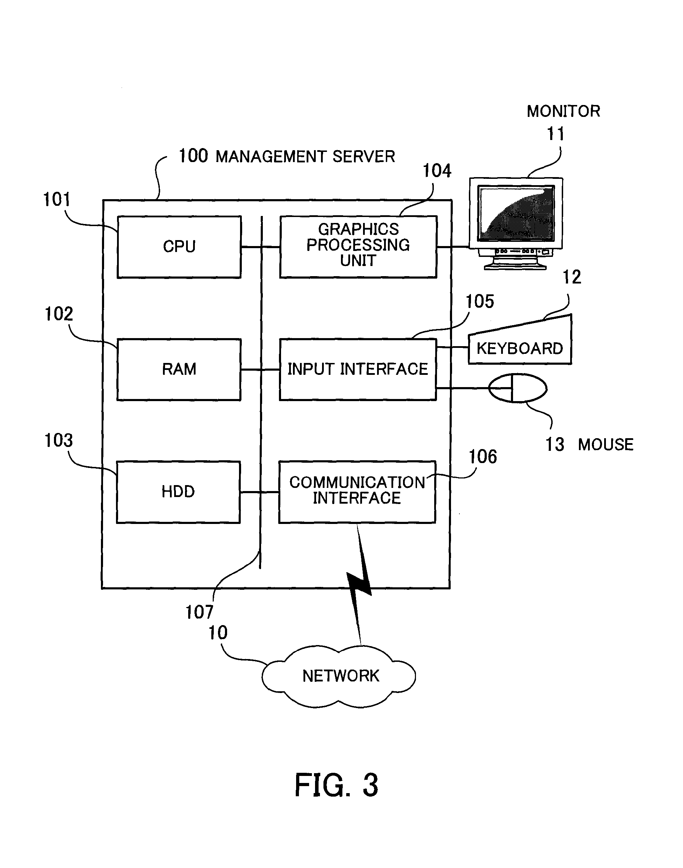

The management server having the above processing functions makes it possible to apply the present invention to the SAN. An embodiment in which the present invention is applied to the SAN will now be described in detail.

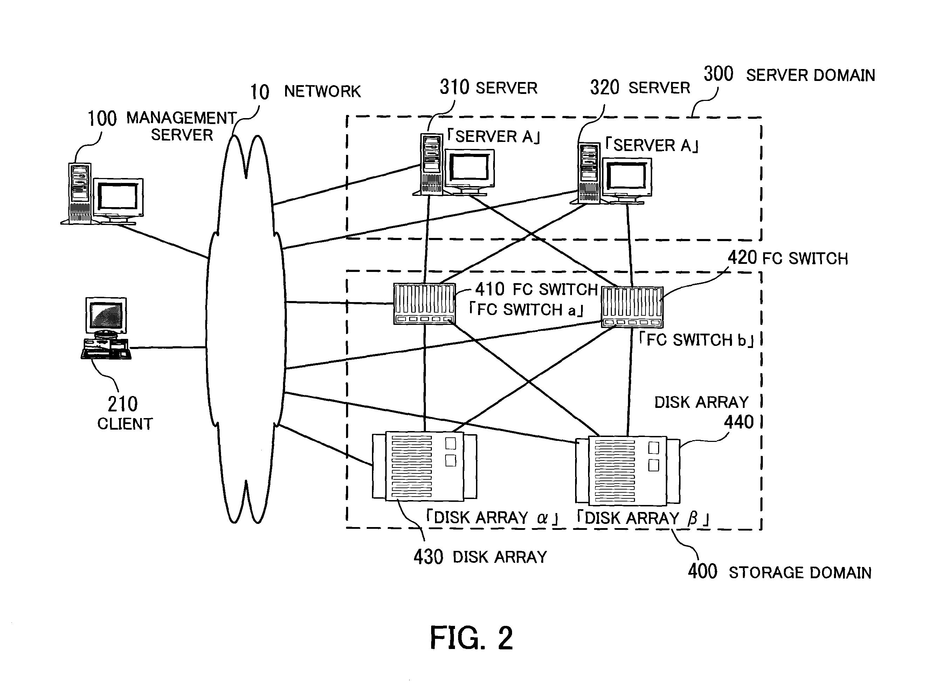

Fig. 2 is a view showing the configuration of a system according to the embodiment of the present invention. With this system, a management server 100 manages the construction of a server domain 300 and a storage domain 400. The server domain 300 includes servers 310 and 320.
The storage domain 400 includes fiber channel (FC) switches 410 and 420 and disk arrays 430 and 440.
The management server 100 is connected to a client 210, the servers 310 and 320, the FC switches 410 and 420, and the disk arrays 430 and 440 via a network 10. The client 210 is a terminal unit used for sending the contents of operation input by a manager to the management server 100 and receiving and displaying the result of a process performed by the management server 100.
The servers 310 and 320 are connected to the FC switches 410 and 420 by fiber channels. The FC switches 410 and 420 are connected to the disk arrays 430 and 440 by fiber channels. A transmission path from each of the servers 310 and 320 to each of the disk arrays 430 and 440 is multiplexed. For example, transmission paths from the server 310 to the disk array 430 include a transmission path via the FC switch 410 and a transmission path via FC switch 420.
Names are given to the servers 310 and 320, the FC switches 410 and 420, and the disk arrays 430 and 440 to uniquely identify them on the system. The name of the server 310 is "server A". The name of the server 320 is "server B". The name of the FC switch 410 is "FC switch a". The name of the FC switch 420 is "FC switch b". The name of the disk array 430 is "disk array α". The name of the disk array 440 is "disk array β".
The hardware configuration of each component will now be described with reference to Figs. 3 through 5.
Fig. 3 is a view showing an example of the hardware configuration of the management server. The whole of the management server 100 is controlled by a central processing unit (CPU) 101. A random access memory (RAM) 102, a hard disk drive (HDD) 103, a graphics processing unit 104, an input interface 105, and a communication interface 106 are connected to the CPU 101 via a bus 107.
The RAM 102 temporarily stores at least part of an operating system (OS) or an application program executed by the CPU 101. The RAM 102 also stores various pieces of data which the CPU 101 needs to perform a process. The HDD 103 stores the OS and application programs.
A monitor 11 is connected to the graphics processing unit 104. In accordance with instructions from the CPU 101, the graphics processing unit 104 displays an image on a screen of the monitor 11. A keyboard 12 and a mouse 13 are connected to the input interface 105. The input interface 105 sends a signal sent from the keyboard 12 or the mouse 13 to the CPU 101 via the bus 107.

The communication interface 106 is connected to a network 10. The communication interface 106 exchanges data with another computer via the network 10.

By adopting the above-mentioned hardware configuration, the processing function of this embodiment can be realized. The client 210 can also be realized by adopting the same hardware configuration that is shown in Fig. 3.

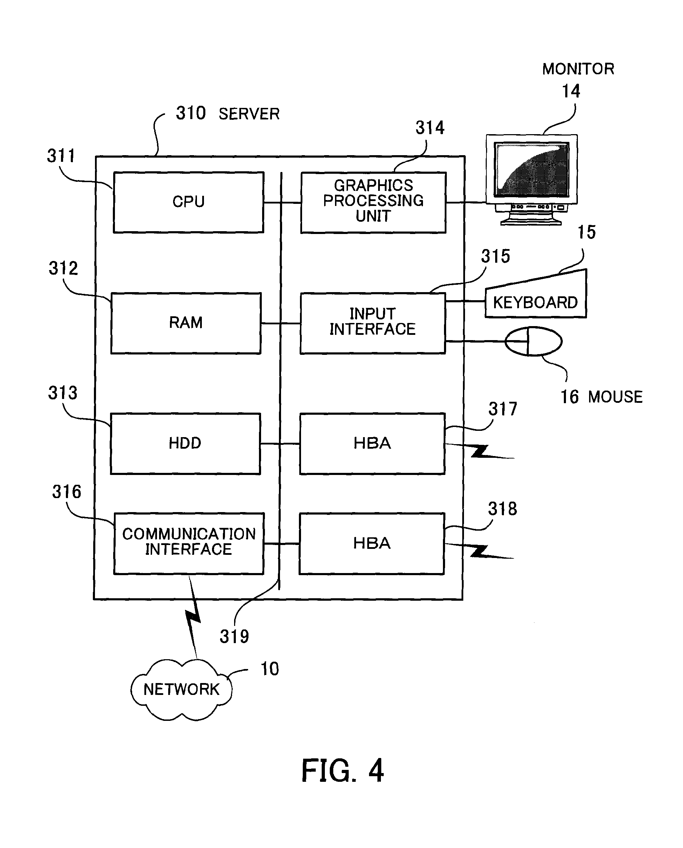

Fig. 4 is a view showing an example of the hardware configuration of a server. The whole of the server 310 is controlled by a CPU 311. A RAM 312, a hard disk drive (HDD) 313, a graphics processing unit 314, an input interface 315, a communication interface 316, and host bus adapters (HBA) 317 and 318 are connected to the CPU 311 via a bus 319.

The RAM 312 temporarily stores at least part of an OS or an application program executed by the CPU 311. The RAM 312 also stores various pieces of data which the CPU 311 needs to perform a process. The HDD 313 stores the OS and application programs.

A monitor 14 is connected to the graphics processing unit 314. In accordance with instructions from the CPU 311, the graphics processing unit 314 displays an image on a screen of the monitor 14. A keyboard 15 and a mouse 16 are connected to the input interface 315. The input interface 315 sends a signal sent from the keyboard 15 or the mouse 16 to the CPU 311 via the bus 319.

The communication interface 316 is connected to the network 10. The communication interface 316 exchanges data with another computer via the network 10.

The HBA 317 is connected to the FC switch 410 by a fiber channel. The HBA 317 communicates with the disk arrays 430 and 440 via the FC switch 410. The HBA 318 is connected to the FC switch 420 by a fiber channel. The HBA 318 communicates with the disk arrays 430 and 440 via the FC switch 420.

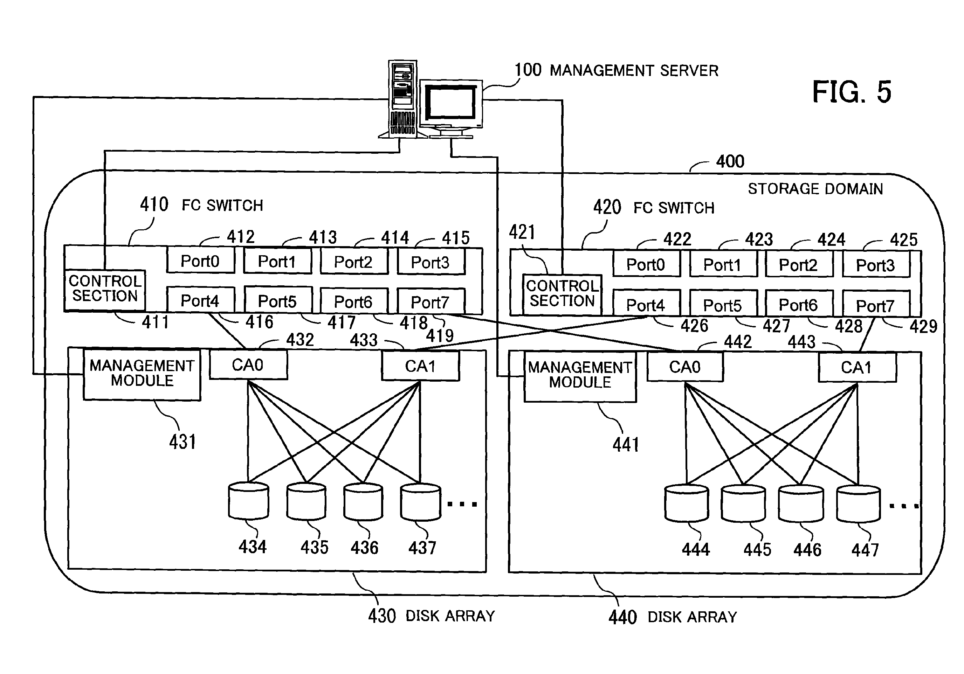

In Fig. 4, the hardware configuration of the server 310 is shown. However, the server 320 can also be realized by adopting the same hardware configuration. Fig. 5 is a view showing the hardware configurations of each FC switch and each disk array. The FC switch 410 includes a control section 411 and ports 412 through 419. A port number is assigned to each of the ports 412 through 419. The port number of the port 412 is "0". The port number of the port 413 is "1". The port number of the port 414 is "2". The port number of the port 415 is "3". The port number of the port 416 is "4". The port number of the port 417 is "5". The port number of the port 418 is "6". The port number of the port 419 is "7".

The control section 411 and each of the ports 412 through 419 are connected (not shown). The control section 411 controls the whole of the FC switch 410. The control section 411 is connected to the management server 100 and can set an environment in which the FC switch 410 operates in accordance with instructions from the management server 100. Each of the ports 412 through 419 is a communication port for connecting a communication line (such as an optical fiber) for a fiber channel.

Similarly, the FC switch 420 includes a control section 421 and ports 422 through 429. A port number is assigned to each of the ports 422 through 429. The port number of the port 422 is "0". The port number of the port 423 is "1". The port number of the port 424 is "2". The port number of the port 425 is "3". The port number of the port 426 is "4". The port number of the port 427 is "5". The port number of the port 428 is "6". The port number of the port 429 is "7".

The control section 421 and each of the ports 422 through 429 are connected (not shown). The control section 421 controls the whole of the FC switch 420. The control section 421 is connected to the management server 100 and can set an environment in which the FC switch 420 operates in accordance with instructions from the management server 100. Each of the ports 422 through 429 is a communication port for connecting a communication line (such as an optical fiber) for a fiber channel.

The disk array 430 includes a management module 431, channel adapters (CA) 432 and 433, and disk drives 434 through 437. The management module 431 and each of the CAs 432 and 433 are connected (not shown) and the management module 431 and each of the disk drives 434 through 437 are connected (not shown). In addition, each of the CAs 432 and 433 and each of the disk drives 434 through 437 are connected. The CAs 432 and 433 are connected to the FC switches 410 and 420 respectively.

The management module 431 manages the whole of the disk array 430. The management module 431 is connected to the management server 100 and sets an environment for each of the CAs 432 and 433 and the disk drives 434 through 437 in response to a request from the management server 100.

The disk array 440 includes a management module 441, CAs 442 and 443, and disk drives 444 through 447. The management module 441 and each of the CAs 442 and 443 are connected (not shown) and the management module 441 and each of the disk drives 444 through 447 are connected (not shown). In addition, each of the CAs 442 and 443 and each of the disk drives 444 through 447 are connected. The CAs 442 and 443 are connected to the FC switches 410 and 420 respectively.

The management module 441 manages the whole of the disk array 440. The management module 441 is connected to the management server 100 and sets an environment for each of the CAs 442 and 443 and the disk drives 444 through 447 in response to a request from the management server 100.

The management server 100 automatically sets environments in the system in which the above hardware configuration is adopted.

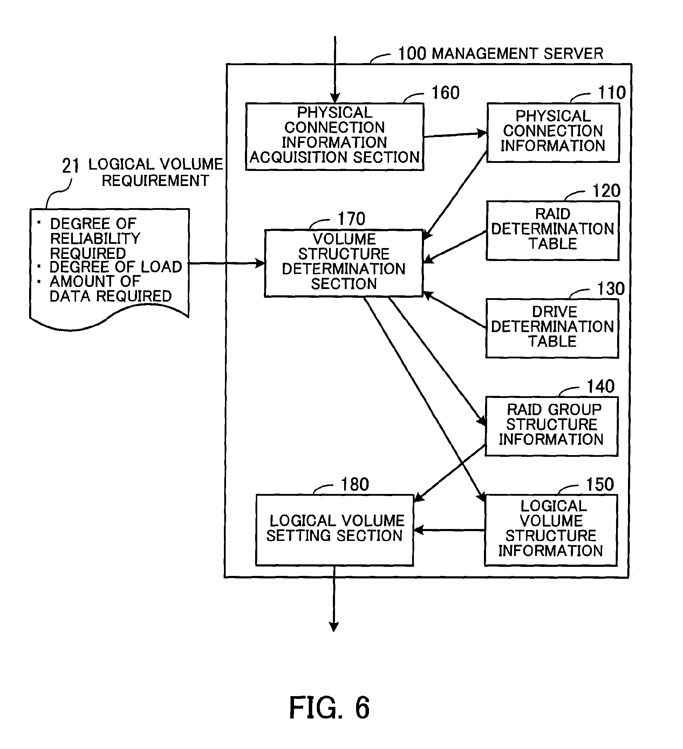

Fig. 6 is a block diagram showing an environment setting function of the management server. The management server 100 includes physical connection information 110, a RAID determination table 120, a drive determination table 130, RAID group structure information 140, logical volume structure information 150, a physical connection information acquisition section 160, a volume structure determination section 170, and a logical volume setting section 180.

The physical connection information 110 stores information indicative of physical connection relationships between the servers 310 and 320, the FC switches 410 and 420, and the disk arrays 430 and 440. Types of the RAID corresponding to the degree of reliability required or the degree of a load are defined in the RAID determination table 120. Correspondences for determining a disk drive to be used according to the type of the RAID and the amount of data required are defined in the drive determination table 130. The RAID group structure information 140 stores information regarding RAID group structure. The logical volume structure information 150 stores information regarding logical volume structure determined by the volume structure determination section 170.

The physical connection information acquisition section 160 acquires information regarding a physical connection with another component from each of the servers 310 and 320, the FC switches 410 and 420, and the disk arrays 430 and 440. The physical connection information acquisition section 160 stores the information it acquired in the physical connection information 110.

The volume structure determination section 170 accepts a logical volume requirement 21 from the client 210 and determines logical volume structure corresponding to the logical volume requirement 21. At this time the volume structure determination section 170 refers to the physical connection information 110, the RAID determination table 120, and the drive determination table 130. When the volume structure determination section 170 determines the logical volume structure, the volume structure determination section 170 stores the contents of the determination in the RAID group structure information 140 and the logical volume structure information 150.

When the volume structure determination section 170 stores new information in the logical volume structure information 150, the logical volume setting section 180 determines the contents of setting performed on the servers 310 and 320, the FC switches 410 and 420, and the disk arrays 430 and 440 in accordance with the new information. The logical volume setting section 180 then gives the servers 310 and 320, the FC switches 410 and 420, and the disk arrays 430 and 440 instructions to set an environment in accordance with the contents of setting.

The servers 310 and 320, the FC switches 410 and 420, and the disk arrays 430 and 440 set logical volumes in accordance with the instructions from the logical volume setting section 180. With the servers 310 and 320, for example, an agent sets a logical volume.

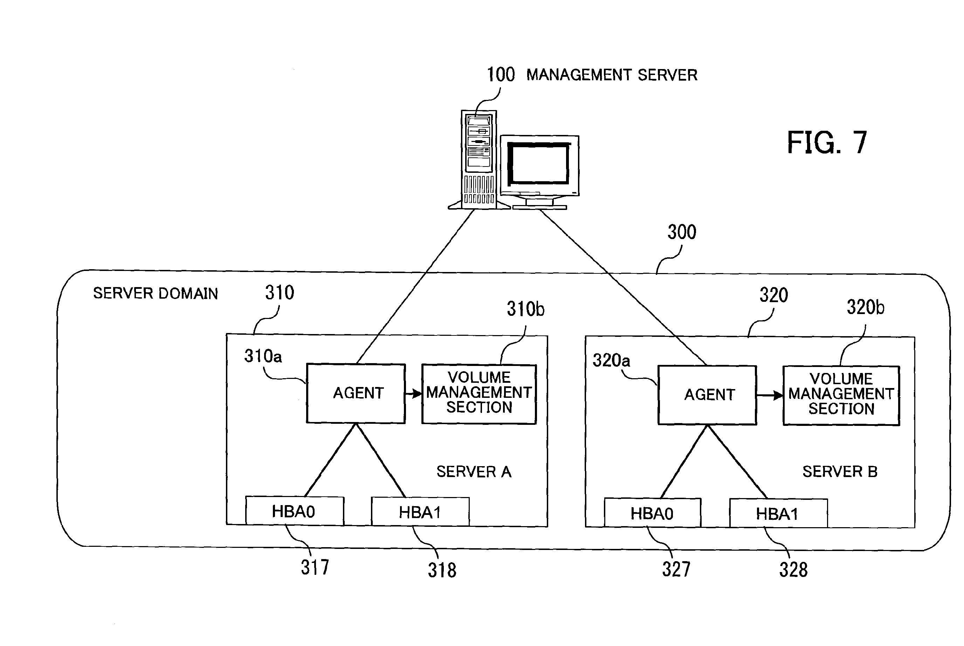

Fig. 7 is a block diagram showing the function of a server. The server 310 includes an agent 310a and a volume management section 310b and the server 320 includes an agent 320a and a volume management section 320b. The agent 310a and the volume management section 310b are functions realized by application programs installed on the server 310. The same applies to the agent 320a and the volume management section 320b.

The agent 310a included in the server 310 sets environments for the HBAs 317 and 318, the volume management section 310b, and the like included in the server 310 in accordance with instructions from the management server 100. Similarly, the agent 320a included in the server 320 sets environments for the HBAs 327 and 328, the volume management section 320b, and the like included in the server 320 in accordance with instructions from the management server 100.

The volume management section 310b has a volume management function for mirroring a disk unit which can be accessed from the server 310 and for protecting property from an unforeseen situation, such as a disk failure. Similarly, the volume management section 320b has a volume management function for mirroring a disk unit which can be accessed from the server 320 and for protecting property from an unforeseen situation, such as a disk failure.

Names are given to the HBAs 317 and 318 included in the server 310 so that they can uniquely be identified in the server 310. The name of the HBA 317 is "HBA0" and the name of the HBA 318 is "HBA1". Similarly, names are given to the HBAs 327 and 328 included in the server 320 so that they can uniquely be identified in the server 320. The name of the HBA 327 is "HBA0" and the name of the HBA 328 is "HBA1".

By the way, a RAID group is formed of one or more disk drives. One or more logical volumes are built on the disk drives which belong to the RAID group.

The plurality of logical volumes built are grouped. Connections to the servers 310 and 320 are managed according to groups. In this case, a logical volume group is referred to as an affinity group. An access path from each of the servers 310 and 320 to a disk drive is recognized as a path via an affinity group logically set.

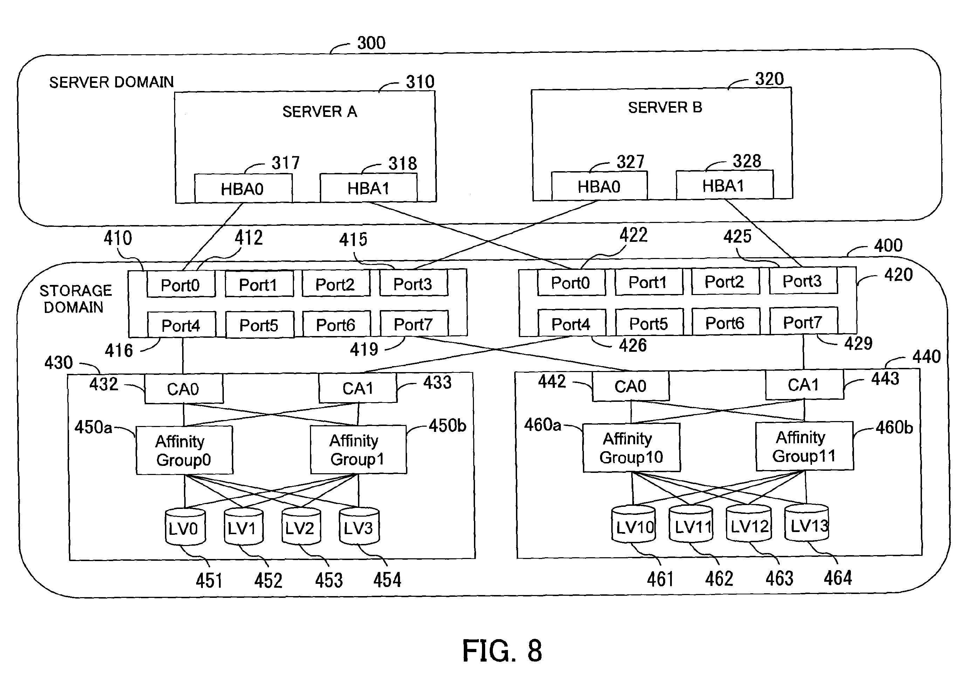

Fig. 8 is a view showing connection relationships between servers and disk drives. In this example, the number of redundant paths between domains is two.

The HBA 317 of the server 310 is connected to the port 412 of the FC switch 410 the port number of which is "0". The HBA 318 of the server 310 is connected to the port 422 of the FC switch 420 the port number of which is "0".

The HBA 327 of the server 320 is connected to the port 415 of the FC switch 410 the port number of which is "3". The HBA 328 of the server 320 is connected to the port 425 of the FC switch 420 the port number of which is "3"

The port 416 of the FC switch 410 the port number of which is "4" is connected to the CA 432 of the disk array 430. The port 419 of the FC switch 410 the port number of which is "7" is connected to the CA 442 of the disk array 440.

The port 426 of the FC switch 420 the port number of which is "4" is connected to the CA 433 of the disk array 430. The port 429 of the FC switch 420 the port number of which is "7" is connected to the CA 443 of the disk array 440.

Logical volumes 451 through 454 included in the disk array 430 are classified into affinity groups 450a and 450b. The CAs 432 and 433 of the disk array 430 are connected to the logical volumes 451 through 454 via the affinity groups 450a and 450b logically set.

Logical volumes 461 through 464 included in the disk array 440 are classified into affinity groups 460a and 460b. The CAs 442 and 443 of the disk array 440 are connected to the logical volumes 461 through 464 via the affinity groups 460a and 460b logically set.

The physical connection information acquisition section 160 included in the management server 100 acquires the connection relationships shown in Fig.8 as information and stores this information in the physical connection information 110.

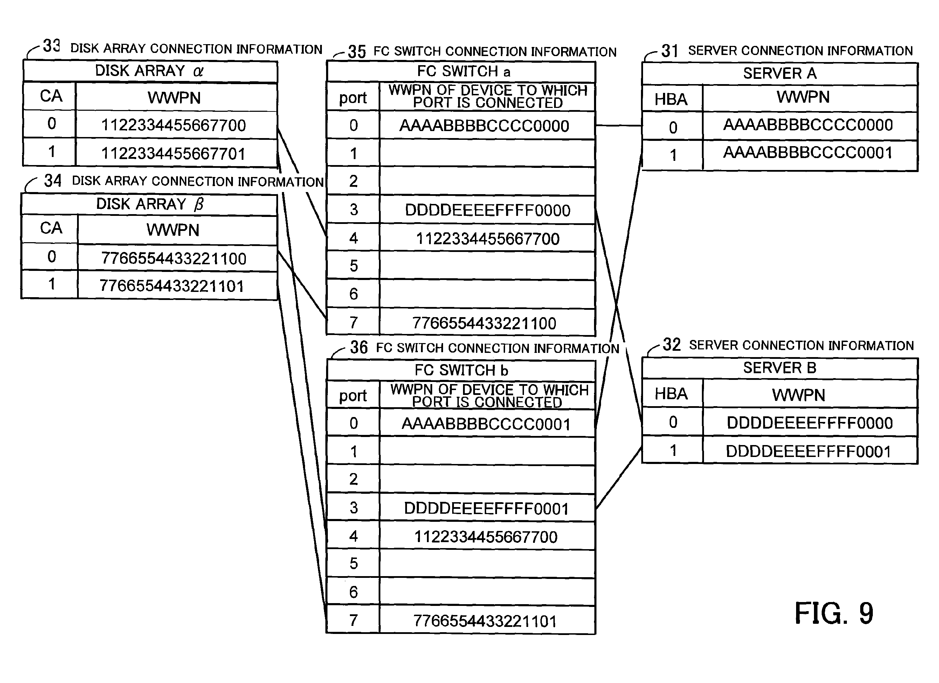

Fig. 9 is a view showing an example of the data structure of the physical connection information. The physical connection information 110 includes server connection information 31 and 32, disk array connection information 33 and 34, and FC switch connection information 35 and 36.

The server connection information 31 and 32 are connection information acquired from the servers 310 and 320 respectively. Identification numbers of the HBAs included in the server 310 are set in the server connection information 31 and identification numbers of the HBAs included in the server 320 are set in the server connection information 32. In this embodiment, world wide port names (WWPN) are used as the identification numbers.

The server connection information 31 is connection information regarding the server 310 having the name "server A". The HBA 317 of the server 310 has the name "HBA0" and the WWPN "AAAABBBBCCCC0000". The HBA 318 of the server 310 has the name "HBA1" and the WWPN "AAAABBBBCCCC0001".

The server connection information 32 is connection information regarding the server 320 having the name "server B". The HBA 327 of the server 320 has the name "HBA0" and the WWPN "DDDDEEEEFFFF0000". The HBA 328 of the server 320 has the name "HBA1" and the WWPN "DDDDEEEEFFFF0001".

The disk array connection information 33 and 34 are connection information acquired from the disk arrays 430 and 440 respectively. Identification numbers of the CAs included in the disk array 430 are set in the disk array connection information 33 and identification numbers of the CAs included in the disk array 440 are set in the disk array connection information 34. In this embodiment, WWPNs are used as the identification numbers.

The disk array connection information 33 is connection information regarding the disk array 430 having the name "disk array $\alpha$". The CA 432 of the disk array 430 has the name "CA0" and the WWPN "1122334455667700". The CA 433 of the disk array 430 has the name "CA1" and the WWPN "1122334455667701".

The disk array connection information 34 is connection information regarding the disk array 440 having the name "disk array $\beta$". The CA 442 of the disk array 440 has the name "CA0" and the WWPN "7766554433221100". The CA 443 of the disk array 440 has the name "CA1" and the WWPN "7766554433221101".

The FC switch connection information 35 and 36 is connection information acquired from the FC switches 410 and 420 respectively. An identification number of a device to which each port included in the FC switch 410 is connected is set in the FC switch connection information 35 and an identification number of a device to which each port included in the FC switch 420 is connected is set in the FC switch connection information 36.

The FC switch connection information 35 is connection information regarding the FC switch 410 having the name "FC switch a". The port 412 of the FC switch 410 the port number of which is "0" is connected to a device having the WWPN "AAAABBBBCCCC0000". This shows that the port 412 is connected to the HBA 317 which has the name "HBA0" and which is included in the server 310 having the name "server A". Similarly, WWPNs in the FC switch connection information 35 set for the ports 415, 416, and 419 the port numbers of which are "3," "4," and "7," respectively, indicate devices to which the ports 415, 416, and 419 are connected.

The FC switch connection information 36 is connection information regarding the FC switch 420 having the name "FC switch b". The port 422 of the FC switch 420 the port number of which is "0" is connected to a device having the WWPN "AAAABBBBCCCC0001". This shows that the port 422 is connected to the HBA 318 which has the name "HBA1" and which is included in the server 310 having the name "server A". Similarly, WWPNs in the FC switch connection information 36 set for the ports 425, 426, and 429 the port numbers of which are "3," "4," and "7," respectively, indicate devices to which the ports 425, 426, and 429 are connected.

The volume structure determination section 170 refers the above physical connection information 110 and determines volume structure corresponding to a logical volume requirement designated by a user. At this time the volume structure determination section 170 refers to the RAID determination table 120 and the drive determination table 130.

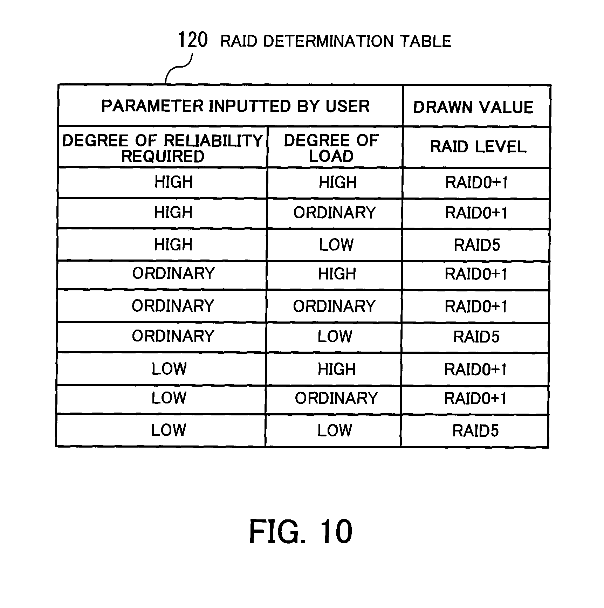

Fig. 10 is a view showing an example of the data structure of the RAID determination table. In the RAID determination table 120, an optimum RAID level is drawn with reliability, a load (performance) and costs taken into consideration. That is to say, a RAID level is an important element that determines the performance and reliability of the SAN. A RAID level must be determined with costs taken into consideration. This needs a copious knowledge of a SAN system. The RAID determination table 120 includes such knowledge.

Parameters inputted by a user and a drawn value are registered in the RAID determination table 120 and are associated with one another.

The degree of reliability required and the degree of a load of parameters (information included in the logical volume requirement 21) inputted by the user are used in the RAID determination table 120.

A drawn value is indicated by a RAID level. RAID0 through RAID5 exist as RAID levels.

RAID0 is a technique for improving read/write speed by dividing data into plural pieces and storing the plural pieces of data in a plurality of hard disks in a disk array (striping). RAID1 is a technique for increasing data security by recording the same data on two hard disks (mirroring). RAID2 is the technique of using not only hard disks for recording but also one or more hard disks for correcting an error. RAID3 is the technique of using a hard disk in a disk array for recording parity for the purpose of correcting an error. The unit of data division in RAID4 is larger than that of data division in RAID3. With RAID5, a drive onto which parity information is written is not determined and data and the parity information are dispersed on many drives in a disk array. That is to say, RAID5 is a technique for increasing resistance to faults.

In this embodiment, both of RAID0 and RAID1 (RAID0+1) or RAID5 is applied as a RAID level. If RAID0+1 and RAID5 are compared, usually RAID0+1 is more advantageous than RAID5 from the viewpoint of performance. Compared with RAID5, however, the number of disk units needed for making up a RAID is large. This leads to high costs. Therefore, a RAID level is adopted in the following way in the example shown in Fig. 10. If the degree of a load is low, then RAID5 is adopted. If the degree of a load is ordinary or high, then RAID0+1 is adopted.

By referring to the above RAID determination table 120, an optimum RAID level can be determined according to a combination of the degree of reliability required and the degree of a load. Even if both of the degree of reliability required and the degree of a load are low, some RAID technique is applied in the example shown in Fig. 10. In such a case, however, applying no RAID technique is justifiable from the viewpoint of effective use of resources.

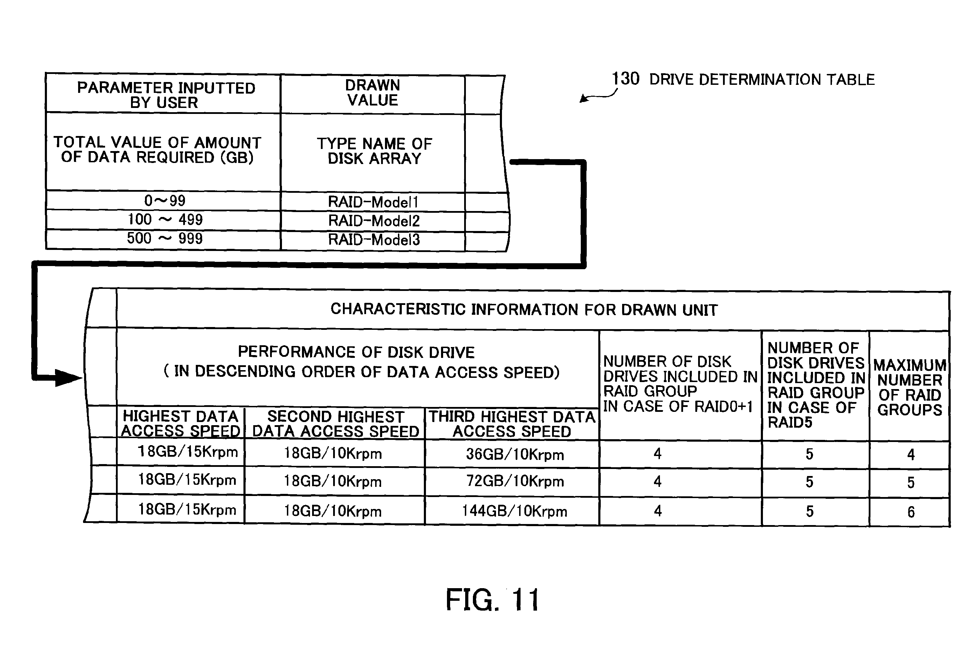

Fig. 11 is a view showing an example of the data structure of the drive determination table. Information (table) for drawing the type of an optimum disk array from the amount of data required and characteristic data for each disk array needed for designing disk array structure are registered in the drive determination table 130. A parameter inputted by a user, a drawn value, and characteristic information for a drawn unit registered in the drive determination table 130 are associated with one another.

The range of the total value (in gigabytes) of the amount of data required which is included in the logical volume requirement 21 is set as the parameter inputted by the user. The ranges of 0 to 99 GB, 100 to 499 GB, and 500 to 999 GB are set in the example shown in Fig. 11.

The type name of a disk array which corresponds to the total value of the amount of data required is set as the drawn value. In the example shown in Fig. 11, a disk array having the type name "RAID-Modell" is used if the total value of the amount of data required is in the range of 0 to 99 GB. A disk array having the type name "RAID-Model2" is used if the total value of the amount of data required is in the range of 100 to 499 GB. A disk array having the type name "RAID-Mode13" is used if the total value of the amount of data required is in the range of 500 to 999 GB.

The performance and the like of a disk array having each type name are set as the characteristic information for the drawn unit. To be concrete, the performance of disk drives included in a disk array (in descending order of data access speed), the number of disk drives included in a RAID group (in the case of RAID0+1), the number of disk drives included in a RAID group (in the case of RAID5), and the maximum number of RAID groups are set.

When a type name of a disk array is selected, a disk array that can hold data the amount of which is larger than the amount of data required should be used. However, to reduce extra costs, it is desirable that a necessary and minimum disk array should be selected.

The performance of a disk drive is indicated by the memory capacity (GB) and the revolution speed (Krpm). If two RAID groups having the same memory capacity are formed, usually a RAID group in which memory capacity per disk drive is the smaller needs more disk drives. If there are many disk drives, parallel access can be gained and access speed can be increased. If the number of revolutions of a disk drive is large, a high access speed is obtained.

A logical volume is generated by referring to the above data.

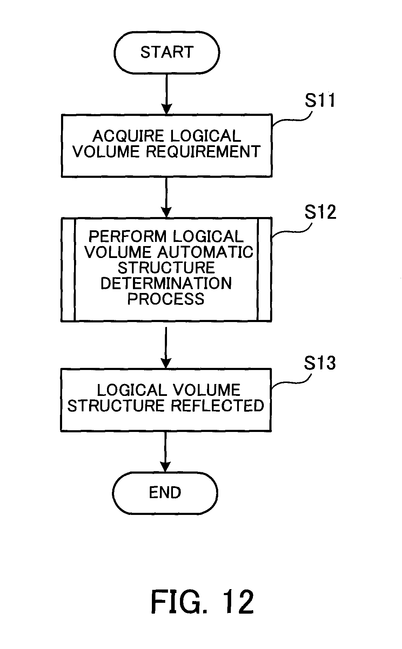

Fig. 12 is a flow chart showing the procedure for a logical volume generation process. The process shown in Fig. 12 will now be described in order of step number.

[Step S11] The volume structure determination section 170 acquires a requirement (logical volume requirement 21) for generating a logical volume needed in a system from the client 210.

For example, a user designates logical volumes needed in the system by an input device, such as a keyboard or a mouse, of the client 210 and inputs a requirement for generating each logical volume. The degree of reliability required, the degree of a load, and the amount of data required for each logical volume are designated in each logical volume requirement 21. The logical volume requirement 21 is sent from the client 210 to the management server 100 and is inputted to the volume structure determination section 170.

[Step S12] The volume structure determination section 170 performs a logical volume automatic structure determination process. The process will later be described in detail. [Step S13] The logical volume setting section 180 performs a process so that the structure of the logical volume in a disk array will be reflected in each component included in the system. That is to say, the logical volume setting section 180 registers the logical volume generated in a storage pool.

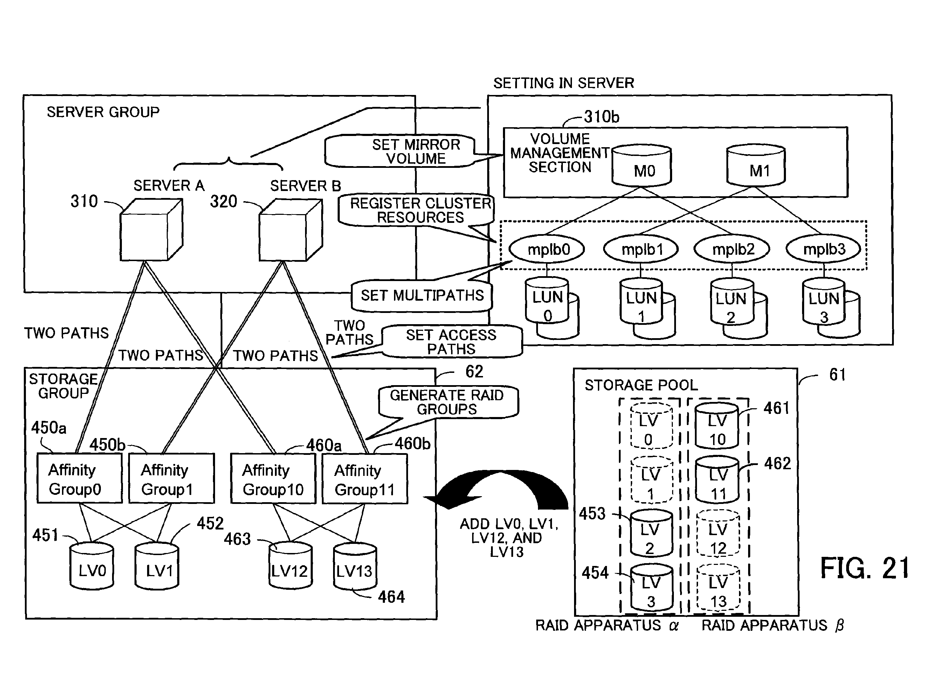

After that, the logical volume setting section 180 performs its resource provisioning function. By doing so, the logical volume is transferred from the storage pool to a storage group and is assigned as an object to be accessed by a server (see Fig. 21 described later).

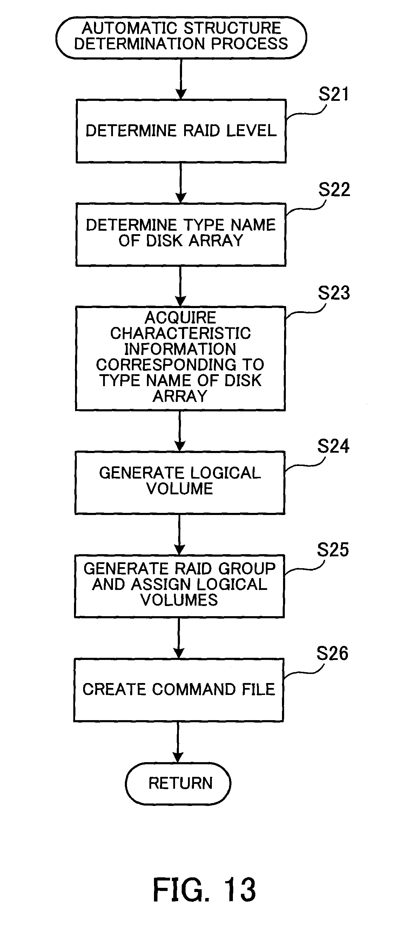

Fig. 13 is a flow chart showing the procedure for the automatic structure determination process. The process shown in Fig. 13 will now be described in order of step number.

[Step S21] When the volume structure determination section 170 accepts the logical volume requirement 21, the volume structure determination section 170 refers to the RAID determination table 120 and determines a RAID level to be applied. That is to say, the volume structure determination section 170 finds an optimum (or recommended) RAID level on the basis of the degree of reliability required and the degree of a load set according to pieces of data.

To be concrete, the volume structure determination section 170 acquires a combination of the degree of reliability required and the degree of a load from the logical volume requirement 21 and retrieves a record which meets the degree of reliability required and the degree of a load from the RAID determination table 120. The volume structure determination section 170 then takes a RAID level out of a RAID level column of the record detected.

If there are a plurality of logical volumes to be generated, then a RAID level determination process is repeated by the number of the plurality of logical volumes.

[Step S22] The volume structure determination section 170 refers to the drive determination table 130 and determines the type name of a disk array to be applied. The concrete procedure for a volume determination process will now be described with reference to Fig. 11.

The volume structure determination section 170 retrieves a row which matches the total value of capacity inputted by the user from the Total Value Of Amount Of Data Required column of the drive determination table 130. For example, if the user inputs a data capacity of 300 GB, then the record in the second row is retrieved.

The volume structure determination section 170 then acquires a disk array type name described in the appropriate record. For example, if the record in the second row is retrieved on the basis of the total value of the amount of data required, then the type name "RAID-Model2" is acquired.

[Step S23] The volume structure determination section 170 refers to the drive determination table 130 and acquires characteristic information corresponding to the disk array type name. To be concrete, the volume structure determination section 170 acquires the performance of disk drives, the number of disk drives included in a RAID group, and the maximum number of RAID groups included in the record retrieved in step S22. When the volume structure determination section 170 acquires the performance of disk drives, the volume structure determination section 170 acquires the type of a disk drive the data access speed of which is the highest.

The information acquired is used for generating a RAID group and assigning logical volumes.

[Step S24] The volume structure determination section 170 determines logical volume structure corresponding to the logical volume requirement 21 inputted by the user.

[Step S25] The volume structure determination section 170 generates a RAID group and assigns logical volumes. A RAID group is a set of logical volumes. The RAID levels of logical volumes included in the same RAID group must be the same. Therefore, the volume structure determination section 170 selects logical volumes to which the same RAID level is applied from among the logical volumes generated in step S23 and generates a RAID group.

In this case, the volume structure determination section 170 uses disk drives of the disk drive type acquired in step S23 for generating the RAID group. In addition, the volume structure determination section 170 selects disk drives the number of which corresponds to the "number of disk drives included in a RAID group" acquired in step S23 for generating the RAID group. Furthermore, the number of RAID groups generated by the volume structure determination section 170 must be smaller than or equal to the "maximum number of RAID groups" acquired in step S23.

The capacity of one RAID group can be calculated from these pieces of information in the following way.

```
capacity of RAID5 = capacity of disk drive type x

(number of disk drives included in RAID group - 1)


capacity of RAID0+1 = capacity of disk drive type x

(number of disk drives included in RAID group)/2
```

The volume structure determination section 170 assigns logical volumes to RAID groups so as to make the capacity smaller than or equal to the values calculated in the above way. In this case, the volume structure determination section 170 can indicate assignment relationships by lines and display the assignment relationships on a screen of the client 210.

[Step S26] The volume structure determination section 170 creates a command file which contains instructions given to each component according to the assignment of the logical volumes to the RAID group determined in step S25. After that, step S13 shown in Fig. 12 is performed. The logical volumes are built on the system in accordance with the command file, as determined. As a result, the servers 310 and 320 can access the logical volumes.

The RAID group structure information 140 and the logical volume structure information 150 are created in this way according to the logical volume requirement 21 inputted by the user.

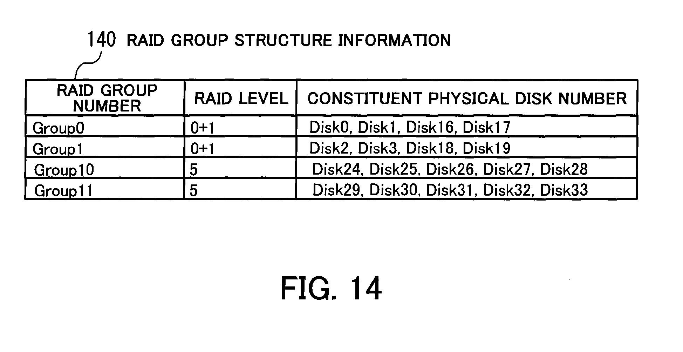

Fig. 14 is a view showing an example of the data structure of the RAID group structure information. A RAID group number, a RAID level, a constituent physical disk number registered in the RAID group structure information 140 are associated with one another.

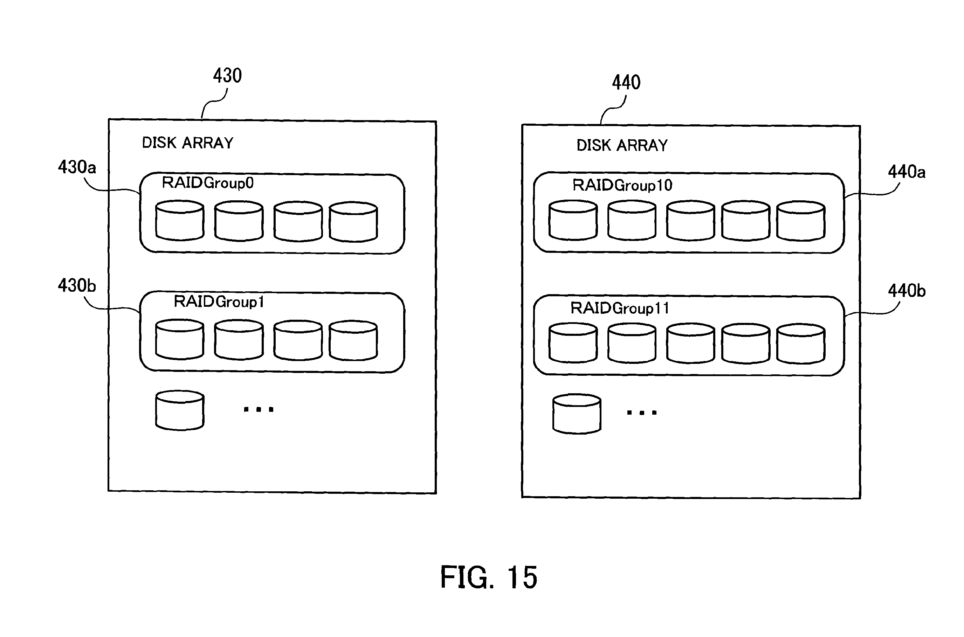

Fig. 15 is a view showing grouping indicated in the RAID group structure information. As shown in Fig. 15, four disk drives included in the disk array 430 comprise a RAID group 430a to which the number "Group0" is given, and four disk drives included in the disk array 430 comprise a RAID group 430b to which the number "Group1" is given. Similarly, five disk drives included in the disk array 440 comprise a RAID group 440a to which the number "Group10" is given, and five disk drives included in the disk array 440 comprise a RAID group 440b to which the number "Group11" is given.

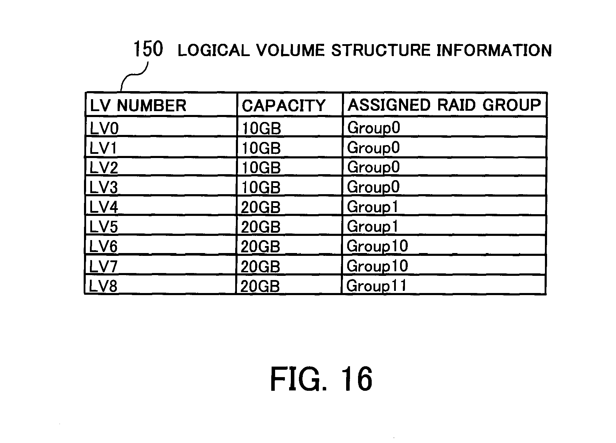

Fig. 16 is a view showing an example of the data structure of the logical volume structure information. A logical volume (LV) number, capacity, and an assigned RAID group number registered in the logical volume structure information 150 are associated with one another.

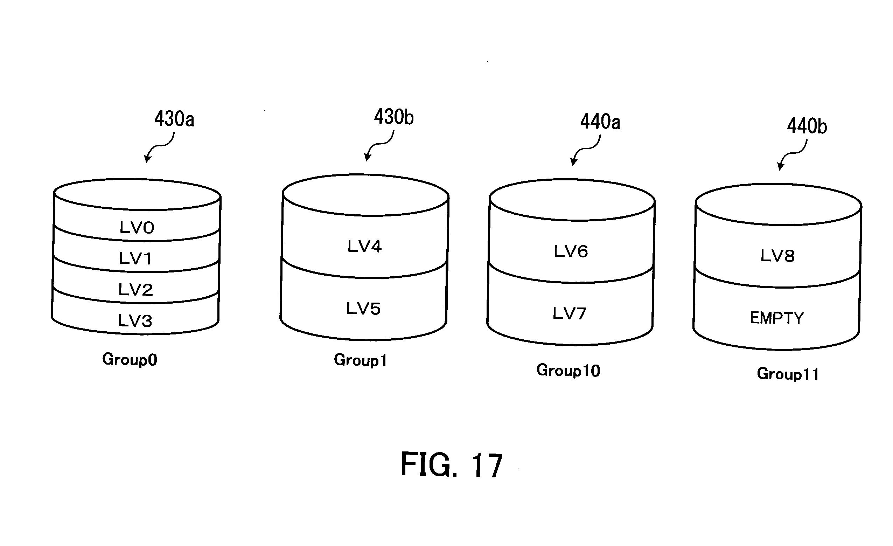

Fig. 17 is a view showing how RAID groups are associated with logical volumes. As shown in Fig. 17, logical volumes are built in each of the RAID groups 430a, 430b, 440a, and 440b.

The result of logical volume building is displayed on the screen of the client 210. An example of inputting a logical volume requirement and an example of a result display screen corresponding to contents inputted will now be indicated.

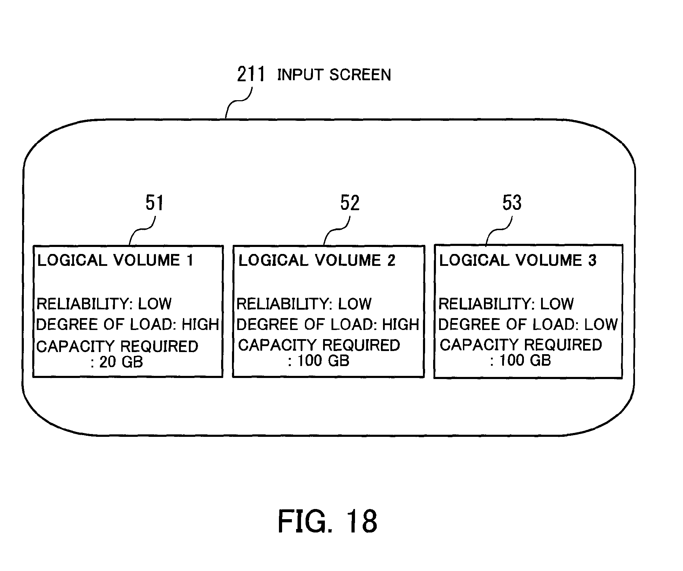

Fig. 18 is a view showing an example of a screen on which a logical volume requirement is inputted. An input screen 211 on which a logical volume requirement is inputted is displayed on the client 210. A user inputs logical volume requirements 51 through 53 regarding logical volumes to be generated on the input screen 211. The logical volume requirements 51 through 53 are sent from the client 210 to the management server 100. As a result, the management server 100 generates the logical volumes and builds an environment in which the servers 310 and 320 access a disk array including the logical volumes.

The management server 100 then returns the result of generating the logical volumes to the client 210. SAN structure obtained as a processing result is displayed on the screen of the client 210.

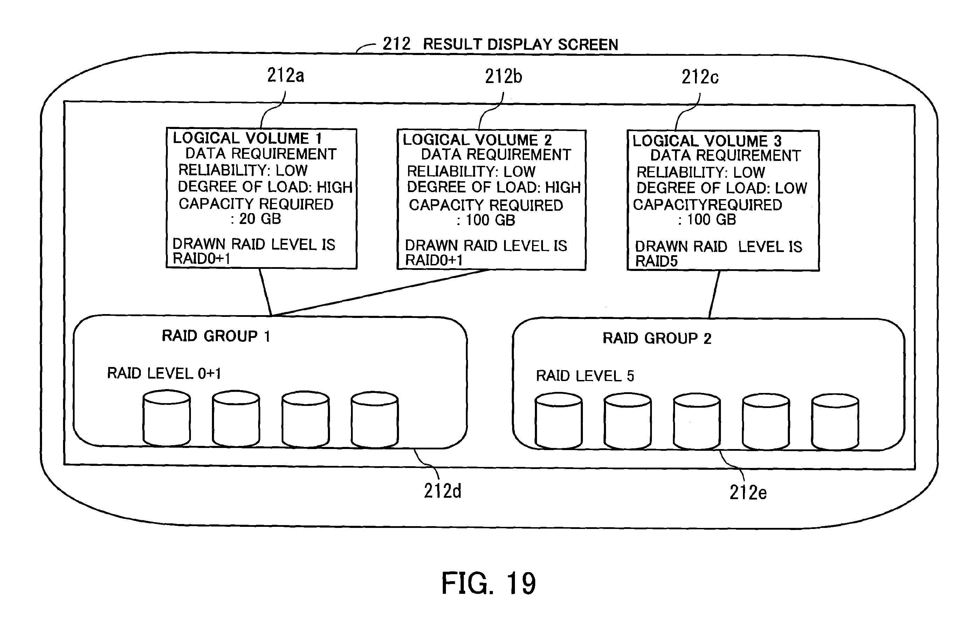

Fig. 19 is a view showing an example of a result display screen. Logical volume requirement display areas 212a, 212b, and 212c and logical volume display areas 212d and 212e are displayed on a result display screen 212.

The logical volume requirements inputted on the input screen 211 are displayed in the logical volume requirement display areas 212a, 212b, and 212c. The logical volumes (and disk drives which make up RAID groups including the logical volumes) generated are displayed in the logical volume display areas 212d and 212e.

The logical volume requirement display areas 212a, 212b, and 212c and the logical volume display areas 212d and 212e are connected by lines indicative of assignment relationship.

A user can check the result of generating the RAID groups and how the logical volumes are assigned by referring to the result display screen 212. After the user checks contents displayed on the result display screen 212, the volume structure determination section 170 included in the management server 100 creates a command file used for generating the logical volumes. The logical volume setting section 180 then sends the command file to the disk arrays 430 and 440. As a result, the RAID groups and the logical volumes are generated in the disk arrays 430 and 440, as displayed on the result display screen 212.

The logical volumes generated are registered in a storage pool as unused volumes. If a logical volume is added to a server, the logical volume is selected from the storage pool. Various setting processes are then performed automatically so that the servers 310 and 320 can access the logical volume.

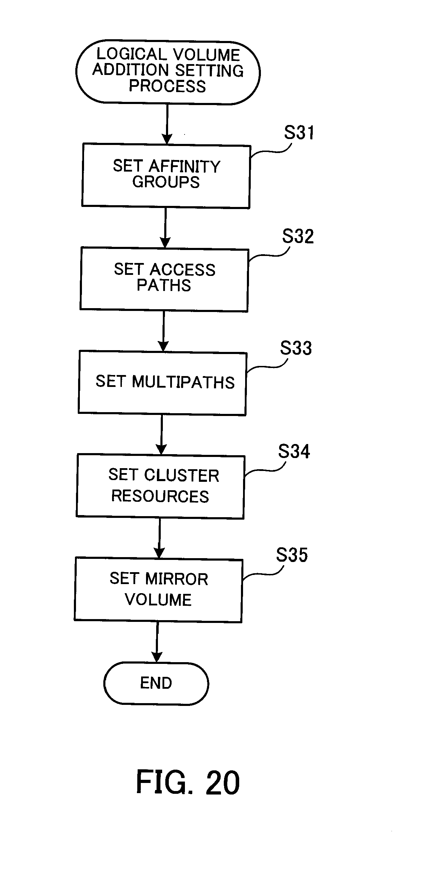

Fig. 20 is a view showing the procedure for a logical volume addition setting process. The process shown in Fig. 20 will now be described in order of step number.

[Step S31] The logical volume setting section 180 included in the management server 100 sets affinity groups first. To be concrete, the logical volume setting section 180 gives the disk arrays 430 and 440 instructions to generate affinity groups.

[Step S32] The logical volume setting section 180 sets access paths from the servers 310 and 320 to the affinity groups generated in step S31. The number of access paths from the server 310 or 320 to each affinity group is two. The logical volume setting section 180 gives the servers 310 and 320 and the FC switches 410 and 420 instructions to set access paths.

[Step S33] The logical volume setting section 180 sets multipaths. A multipath setting process is performed so that applications can recognize two access paths as one access path. The logical volume setting section 180 gives the servers 310 and 320 instructions to set multipaths.

[Step S34] The logical volume setting section 180 sets cluster resources. If the servers 310 and 320 form a cluster,
resources shared on the cluster are defined for the servers 310 and 320 by performing a cluster resource setting process. The logical volume setting section 180 gives the servers 310 and 320 instructions to set cluster resources.

[Step S35] The logical volume setting section 180 performs a mirror volume setting process. The logical volume setting section 180 gives the servers 310 and 320 instructions to set a mirror volume.

Fig. 21 is a schematic view showing the logical volume addition setting process. Logical volumes generated are managed in a storage pool 61. When a user gives instructions to add logical volumes, the logical volume setting section 180 transfers logical volumes 451, 452, 463, and 464 from the storage pool 61 to a storage group 62.

In this case, the disk arrays 430 and 440 have generated the affinity groups 450a and 450b and the affinity groups 460a and 460b, respectively, in accordance with instructions from the logical volume setting section 180. The logical volumes 451 and 452 are added as logical volumes under the affinity groups 450a and 450b generated and the logical volumes 463 and 464 are added as logical volumes under the affinity groups 460a and 460b.

The logical volume setting section 180 gives each component instructions to perform setting. As a result, two access paths are set from each of the servers 310 and 320 to each of the affinity groups 450a, 450b, 460a, and 460b generated. The servers 310 and 320 can access the logical volumes via the access paths set. The servers 310 and 320 identify the logical volumes by their logical unit numbers (LUN).

In addition, the logical volume setting section 180 gives the servers 310 and 320 instructions to perform setting. As a result, multipath setting, cluster resource setting, and mirror volume setting are performed. With the multipath setting, a LUN given to each access path to the same logical volume is associated with one multipath instance number (mplb0, mplb1, mplb2, or mplb3). With the cluster resource setting, multipath instances mplb0, mplb1, mplb2, and mplb3 generated by the servers 310 and 320, which are cluster nodes, are registered as cluster resources. With the mirror volume setting, a plurality of multipath instance numbers are associated with each of mirror volume numbers (M0 and M1). Mirroring is performed by a volume which can be accessed by a plurality of multipath instance numbers associated with one mirror volume number.

The contents of the setting will now be described concretely with the addition of logical volumes as an example. As shown in Fig. 21, RAID groups each including the logical volumes 451 and 452 and affinity groups each including the logical volumes 463 and 464 are newly generated in the following example. Information regarding the affinity groups is managed in the logical volume setting section 180 as affinity group information.

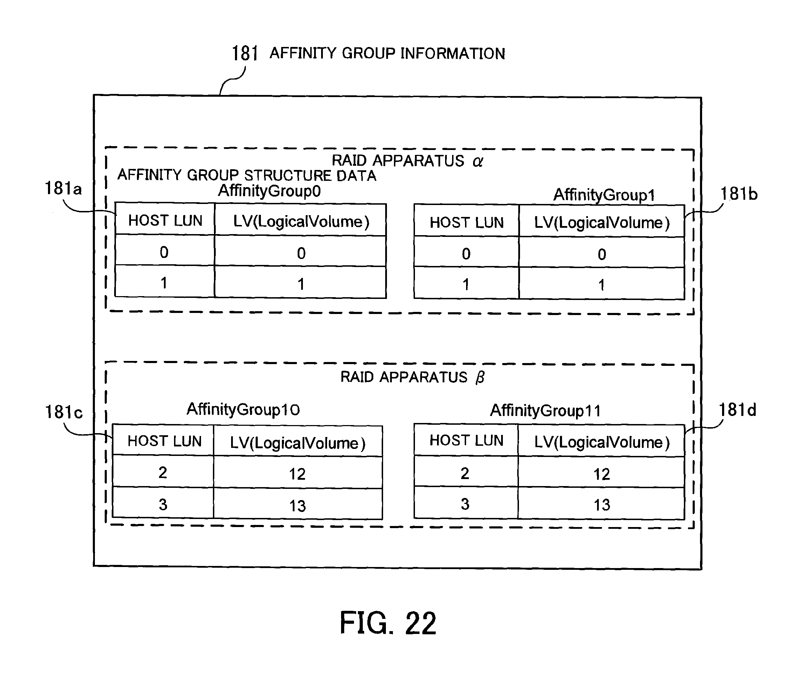

Fig. 22 is a view showing an example of the data structure of affinity group information. Affinity group information 181 includes affinity group structure data 181a, 181b, 181c, and 181d according to affinity groups. A combination of the host LUN (LUN used by the servers 310 and 320 for gaining access) of a logical volume which belongs to the affinity group and a logical volume number is registered in the affinity group structure data 181a. The same applies to the affinity group structure data 181b, 181c, and 181d.

The affinity group structure data 181a is structure data regarding the affinity group 450a to which the affinity group number "Affinity Group 0" is given. The affinity group 450a is generated for access from the server 310. The logical volumes 451 and 452 are registered in the affinity group structure data 181a so that the server 310 can access them. The LUNs of the logical volumes 451 and 452 are "0" and "1" respectively.

The affinity group structure data 181b is structure data regarding the affinity group 450b to which the affinity group number "Affinity Group 1" is given. The affinity group 450b is generated for access from the server 320. The contents of the affinity group structure data 181b are the same as those of the affinity group structure data 181a.

The affinity group structure data 181c is structure data regarding the affinity group 460a to which the affinity group number "Affinity Group 10" is given. The affinity group 460a is generated for access from the server 310. The logical volumes 463 and 464 are registered in the affinity group structure data 181c so that the server 310 can access them. The LUNs of the logical volumes 463 and 464 are "12" and "13" respectively.

The affinity group structure data 181d is structure data regarding the affinity group 460b to which the affinity group number "Affinity Group 11" is given. The affinity group 460b is generated for access from the server 320. The contents of the affinity group structure data 181d are the same as those of the affinity group structure data 181c.

When the logical volumes are added from the storage pool 61 to the storage group 62, affinity group structure data corresponding to each of the servers 310 and 320 is created in this way.

The affinity group structure data 181a and 181b is defined for the affinity groups included in the disk array 430. Therefore, the affinity group structure data 181a and 181b is sent to the disk array 430 and the affinity groups are set in the disk array 430.

The affinity group structure data 181c and 181d is defined for the affinity groups included in the disk array 440. Therefore, the affinity group structure data 181c and 181d is sent to the disk array 440 and the affinity groups are set in the disk array 440.

When the affinity groups are set in the disk arrays 430 and 440, the access paths from the servers 310 and 320 to the affinity groups are set. At this time two paths which differ in route are set by a redundant path setting function. When the access paths are set, devices indicated by LUNs are set at each HBA port included in the servers 310 and 320. As a result, the servers 310 and 320 can access the affinity groups via the HBAs.

After that, the multipath setting process is performed. Multipath structure data used for managing multipaths is created in the multipath setting process.

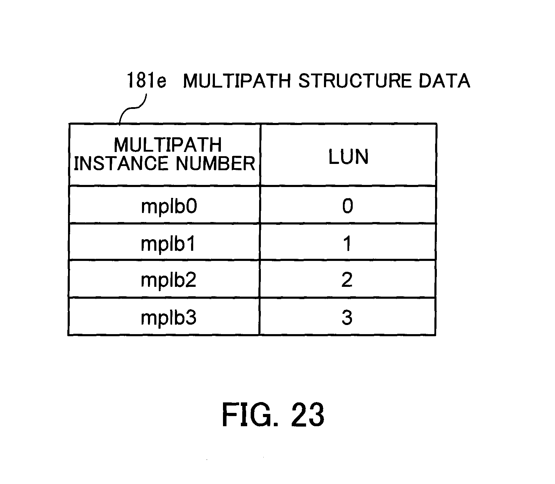

Fig. 23 is a view showing an example of the data structure of multipath structure data. A multipath instance number and a LUN registered in multipath structure data 181e are associated with each other.

In the example shown in Fig. 23, the LUN "0" is set for the multipath instance number "mplb0". The LUN "1" is set for the multipath instance number "mplb1". The LUN "2" is set for the multipath instance number "mplb2". The LUN "3" is set for the multipath instance number "mplb3".

The multipath structure data 181e is sent to the servers 310 and 320. Each of the servers 310 and 320 then executes a multipath creation command in accordance with the multipath structure data 181e to create a multipath instance.

Each of the servers 310 and 320 then performs the cluster resource setting to register the multipath instance as a cluster resource.

Next, the management server 100 creates mirror volume structure data.

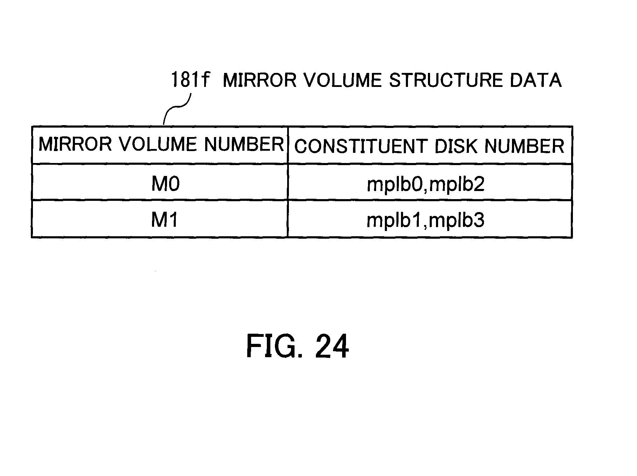

Fig. 24 is a view showing an example of the data structure of mirror volume structure data. A mirror volume number and a constituent disk number registered in mirror volume structure data 181f are associated with each other. A mirror volume number is an identification number given to a mirror volume. A constituent disk number is the multipath instance number of a multipath instance used as the mirror volume.

The management server 100 sends the above mirror volume structure data 181f to the servers 310 and 320 and gives the servers 310 and 320 instructions to perform the mirror volume setting. As a result, the servers 310 and 320 perform the mirror volume setting in accordance with the mirror volume structure data 181f.

In this example, the multipath instance numbers "mplb0" and "mplb1" indicate volumes included in the disk array 430. The multipath instance numbers "mplb2" and "mplb3" indicate volumes included in the disk array 440. Therefore, when multipath instances the multipath instance numbers of which are "mplb0" and "mplb2" are set as constituent disks corresponding to the mirror volume number "M0," the mirror volume setting is performed by using the different disk arrays. Similarly, when multipath instances the multipath instance numbers of which are "mplb1" and "mplb3" are set as constituent disks corresponding to the mirror volume number "M1," the mirror volume setting is performed by using the different disk arrays.

As has been described in the foregoing, the management server 100 determines optimum logical volume structure according to a logical volume requirement inputted by a user and an environment in which a logical volume generated in accordance with the contents of the determination is accessed can automatically be built. As a result, when the user inputs only the logical volume requirement, the logical volume structure is automatically determined and the logical volume is set in a disk array. Therefore, even if the user is not familiar with specifications for each device, the user can generate the logical volume which satisfies redundancy or performance.

In addition, the number of logical volumes can be increased or decreased by one action. That is to say, there is no need to individually perform setting operation on each device. This prevents a setting mistake. Furthermore, setting operation is simplified, so setting work can be performed promptly.

The above functions can be realized with a computer. In this case, a program in which the contents of the functions the management server should have are described is provided. By executing this program on the computer, the above functions are realized on the computer. This program can be recorded on a computer readable record medium. A computer readable record medium can be a magnetic recording device, an optical disk, a magneto-optical recording medium, a semiconductor memory, or the like. A magnetic recording device can be a hard disk drive (HDD), a flexible disk (FD), a magnetic tape, or the like. An optical disk can be a digital versatile disk (DVD), a digital versatile disk random access memory (DVD-RAM), a compact disk read only memory (CD-ROM), a compact disk recordable (CD-R)/rewritable (CD-RW), or the like. A magneto-optical recording medium can be a magneto-optical disk (MO) or the like.

To place the program on the market, portable record media, such as DVDs or CD-ROMs, on which it is recorded are sold. Alternatively, the program is stored in advance on a hard disk in a server computer and is transferred from the server computer to another computer via a network.

When the computer executes this program, it will store the program, which is recorded on a portable record medium or which is transferred from the server computer, on, for example, its hard disk. Then the computer reads the program from its hard disk and performs processes in compliance with the program. The computer can also read the program directly from a portable record medium and perform processes in compliance with the program.

Furthermore, each time the program is transferred from the server computer, the computer can perform processes in turn in compliance with the program it receives.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents. DESCRIPTION OF THE SYMBOLS

| | |
|---|---|
| 1 | computer |
| 1a | logical volume requirement acquisition section |
| 1b | applied technique determination section |
| 1c | logical volume setting section |
| 2 | network |
| 3 | server |
| 4 | disk array |
| 5 | logical volume requirement |

**Claims**

1. A system environment setting support program for supporting the setting of an environment in which a server accesses a disk array, the program making a computer perform steps in which:

   a logical volume requirement acquisition section acquires a logical volume requirement in which a degree of reliability required, a degree of a load, and an amount of data required are designated;
   an applied technique determination section determines an applied technique for improving at least one of reliability and processing speed according to the logical volume requirement; and
   a logical volume setting section outputs instructions to generate a logical volume which is made up of a plurality of disk drives and which is used for realizing the determined applied technique and instructions to set an environment in which the server accesses the logical volume by using the applied technique to the server and the disk array.

2. The system environment setting support program according to claim 1, the program making the computer perform a step in which the applied technique determination section determines one of a reliability improvement technique and a processing speed improvement technique or a technique in which the reliability improvement technique and the processing speed improvement technique are combined as the applied technique.

3. The system environment setting support program according to claim 1, the program making the computer perform a step in which if the degree of the load is high, the applied technique determination section determines a processing speed improvement technique as the applied technique.

4. The system environment setting support program according to claim 3, the program making the computer perform a step in which the applied technique determination section determines a striping technique as the processing speed improvement technique.

5. The system environment setting support program according to claim 1, the program making the computer perform a step in which the applied technique determination section determines a mirroring technique as a reliability improvement technique.

6. The system environment setting support program according to claim 1, the program making the computer perform a step in which the applied technique determination section determines a technique for distributing data and parity information and recording the data and the parity information on a plurality of disks as a reliability improvement technique.

7. The system environment setting support program according to claim 1, the program making the computer perform a step in which the applied technique determination section refers to performance information regarding disk drives of each disk array registered in advance and determines disk drives to be used according to the amount of data required.

8. The system environment setting support program according to claim 1, the program making the computer perform a step in which the applied technique determination section determines the number of disk drives to be used according to the determined applied technique.

9. A system environment setting support method for supporting the setting of an environment in which a server accesses a disk array with a computer, the method comprising steps in which:

a logical volume requirement acquisition section acquires a logical volume requirement in which a degree of reliability required, a degree of a load, and an amount of data required are designated;
an applied technique determination section determines an applied technique for improving at least one of reliability and processing speed according to the logical volume requirement; and
a logical volume setting section outputs instructions to generate a logical volume which is made up of a plurality of disk drives and which is used for realizing the determined applied technique and instructions to set an environment in which the server accesses the logical volume by using the applied technique to the server and the disk array.

10. A system environment setting support apparatus for supporting the setting of an environment in which a server accesses a disk array, the apparatus comprising:

a logical volume requirement acquisition section for acquiring a logical volume requirement in which a degree of reliability required, a degree of a load, and an amount of data required are designated;
an applied technique determination section for determining an applied technique for improving at least one of reliability and processing speed according to the logical volume requirement; and
a logical volume setting section for outputting instructions to generate a logical volume which is made up of a plurality of disk drives and which is used for realizing the determined applied technique and instructions to set an environment in which the server accesses the logical volume by using the applied technique to the server and the disk array.

11. A system environment setting support program recorded on a computer readable record medium for supporting the setting of an environment in which a server accesses a disk array, the program making a computer perform steps in which:

a logical volume requirement acquisition section acquires a logical volume requirement in which a degree of reliability required, a degree of a load, and an amount of data required are designated;
an applied technique determination section determines an applied technique for improving at least one of reliability and processing speed according to the logical volume requirement; and
a logical volume setting section outputs instructions to generate a logical volume which is made up of a plurality of disk drives and which is used for realizing the determined applied technique and instructions to set an environment in which the server accesses the logical volume by using the applied technique to the server and the disk array.

FIG. 1

FIG. 2

EP 1 811 392 A1

100 MANAGEMENT SERVER

MONITOR
11

101

CPU

104

GRAPHICS
PROCESSING
UNIT

102

RAM

105

INPUT INTERFACE

KEYBOARD

12

13  MOUSE

103

HDD

106

COMMUNICATION
INTERFACE

107

10

NETWORK

FIG. 3

18

MONITOR
14

310 SERVER

314

311

CPU

GRAPHICS
PROCESSING
UNIT

15

312

315

RAM

INPUT
INTERFACE

KEYBOARD

16 MOUSE

313

317

HDD

HBA

316

318

COMMUNICATION
INTERFACE

HBA

319

10

NETWORK

FIG. 4

FIG. 5

100 MANAGEMENT SERVER

400

STORAGE DOMAIN

410 FC SWITCH

412 413 414 415

CONTROL SECTION

411

Port0 Port1 Port2 Port3

Port4 Port5 Port6 Port7

416 417 418 419

420 FC SWITCH

421

422 423 424 425

CONTROL SECTION

Port0 Port1 Port2 Port3

Port4 Port5 Port6 Port7

426 427 428 429

MANAGEMENT MODULE

431

CA0 432

CA1 433

MANAGEMENT MODULE

441

CA0 442

CA1 443

434 435 436 437

444 445 446 447

430 DISK ARRAY

440 DISK ARRAY

EP 1 811 392 A1

FIG. 6

EP 1 811 392 A1

**FIG. 7**

100 MANAGEMENT SERVER

300

SERVER DOMAIN 310

310a

310b

| AGENT | → | VOLUME MANAGEMENT SECTION |

SERVER A

HBA0   HBA1

317   318

320

320a

320b

| AGENT | → | VOLUME MANAGEMENT SECTION |

SERVER B

HBA0   HBA1

327   328

FIG. 8

**33 DISK ARRAY CONNECTION INFORMATION**

| DISK ARRAY α | |
|---|---|
| CA | WWPN |
| 0 | 1122334455667700 |
| 1 | 1122334455667701 |

**34 DISK ARRAY CONNECTION INFORMATION**

| DISK ARRAY β | |
|---|---|
| CA | WWPN |
| 0 | 7766554433221100 |
| 1 | 7766554433221101 |

**35 FC SWITCH CONNECTION INFORMATION**

| FC SWITCH a | |
|---|---|
| port | WWPN OF DEVICE TO WHICH PORT IS CONNECTED |
| 0 | AAAABBBBCCCC0000 |
| 1 | |
| 2 | |
| 3 | DDDDEEEEFFFF0000 |
| 4 | 1122334455667700 |
| 5 | |
| 6 | |
| 7 | 7766554433221100 |

**36 FC SWITCH CONNECTION INFORMATION**

| FC SWITCH b | |
|---|---|
| port | WWPN OF DEVICE TO WHICH PORT IS CONNECTED |
| 0 | AAAABBBBCCCC0001 |
| 1 | |
| 2 | |
| 3 | DDDDEEEEFFFF0001 |
| 4 | 1122334455667700 |
| 5 | |
| 6 | |
| 7 | 7766554433221101 |

**31 SERVER CONNECTION INFORMATION**

| SERVER A | |
|---|---|
| HBA | WWPN |
| 0 | AAAABBBBCCCC0000 |
| 1 | AAAABBBBCCCC0001 |

**32 SERVER CONNECTION INFORMATION**

| SERVER B | |
|---|---|
| HBA | WWPN |
| 0 | DDDDEEEEFFFF0000 |
| 1 | DDDDEEEEFFFF0001 |

FIG. 9

EP 1 811 392 A1

120 RAID DETERMINATION TABLE

| PARAMETER INPUTTED BY USER | | DRAWN VALUE |
|---|---|---|
| DEGREE OF RELIABILITY REQUIRED | DEGREE OF LOAD | RAID LEVEL |
| HIGH | HIGH | RAID0+1 |
| HIGH | ORDINARY | RAID0+1 |
| HIGH | LOW | RAID5 |
| ORDINARY | HIGH | RAID0+1 |
| ORDINARY | ORDINARY | RAID0+1 |
| ORDINARY | LOW | RAID5 |
| LOW | HIGH | RAID0+1 |
| LOW | ORDINARY | RAID0+1 |
| LOW | LOW | RAID5 |

# FIG. 10

EP 1 811 392 A1

| PARAMETER INPUTTED BY USER | DRAWN VALUE | |
|---|---|---|
| TOTAL VALUE OF AMOUNT OF DATA REQUIRED (GB) | TYPE NAME OF DISK ARRAY | |
| 0~99 | RAID-Model1 | |
| 100 ~ 499 | RAID-Model2 | |
| 500 ~ 999 | RAID-Model3 | |

130 DRIVE DETERMINATION TABLE

| CHARACTERISTIC INFORMATION FOR DRAWN UNIT | | | | | |
|---|---|---|---|---|---|
| PERFORMANCE OF DISK DRIVE ( IN DESCENDING ORDER OF DATA ACCESS SPEED) | | | NUMBER OF DISK DRIVES INCLUDED IN RAID GROUP IN CASE OF RAID0+1 | NUMBER OF DISK DRIVES INCLUDED IN RAID GROUP IN CASE OF RAID5 | MAXIMUM NUMBER OF RAID GROUPS |
| HIGHEST DATA ACCESS SPEED | SECOND HIGHEST DATA ACCESS SPEED | THIRD HIGHEST DATA ACCESS SPEED | | | |
| 18GB/15Krpm | 18GB/10Krpm | 36GB/10Krpm | 4 | 5 | 4 |
| 18GB/15Krpm | 18GB/10Krpm | 72GB/10Krpm | 4 | 5 | 5 |
| 18GB/15Krpm | 18GB/10Krpm | 144GB/10Krpm | 4 | 5 | 6 |

FIG. 11

START

S11
ACQUIRE LOGICAL
VOLUME REQUIREMENT

S12
PERFORM LOGICAL
VOLUME AUTOMATIC
STRUCTURE
DETERMINATION
PROCESS

S13
LOGICAL VOLUME
STRUCTURE REFLECTED

END

FIG. 12

```
        AUTOMATIC STRUCTURE
        DETERMINATION PROCESS

                 │
                 ▼
        ┌─────────────────────┐      S21
        │  DETERMINE RAID LEVEL │
        └─────────────────────┘
                 │
                 ▼
        ┌─────────────────────┐      S22
        │  DETERMINE TYPE NAME │
        │    OF DISK ARRAY     │
        └─────────────────────┘
                 │
                 ▼
        ┌─────────────────────┐      S23
        │       ACQUIRE        │
        │    CHARACTERISTIC    │
        │     INFORMATION      │
        │   CORRESPONDING TO   │
        │   TYPE NAME OF DISK   │
        │        ARRAY         │
        └─────────────────────┘
                 │
                 ▼
        ┌─────────────────────┐      S24
        │   GENERATE LOGICAL   │
        │       VOLUME         │
        └─────────────────────┘
                 │
                 ▼
        ┌─────────────────────┐      S25
        │  GENERATE RAID GROUP │
        │   AND ASSIGN LOGICAL │
        │       VOLUMES        │
        └─────────────────────┘
                 │
                 ▼
        ┌─────────────────────┐      S26
        │  CREATE COMMAND FILE │
        └─────────────────────┘
                 │
                 ▼
             RETURN
```

# FIG. 13

140 RAID GROUP STRUCTURE INFORMATION

| RAID GROUP NUMBER | RAID LEVEL | CONSTITUENT PHYSICAL DISK NUMBER |
|---|---|---|
| Group0 | 0+1 | Disk0, Disk1, Disk16, Disk17 |
| Group1 | 0+1 | Disk2, Disk3, Disk18, Disk19 |
| Group10 | 5 | Disk24, Disk25, Disk26, Disk27, Disk28 |
| Group11 | 5 | Disk29, Disk30, Disk31, Disk32, Disk33 |

# FIG. 14

## FIG. 15

EP 1 811 392 A1

150  LOGICAL VOLUME STRUCTURE INFORMATION

| LV NUMBER | CAPACITY | ASSIGNED RAID GROUP |
|-----------|----------|---------------------|
| LV0 | 10GB | Group0 |
| LV1 | 10GB | Group0 |
| LV2 | 10GB | Group0 |
| LV3 | 10GB | Group0 |
| LV4 | 20GB | Group1 |
| LV5 | 20GB | Group1 |
| LV6 | 20GB | Group10 |
| LV7 | 20GB | Group10 |
| LV8 | 20GB | Group11 |

# FIG. 16

430a

430b

440a

440b

| LV0 |
| LV1 |
| LV2 |
| LV3 |

Group0

| LV4 |
| LV5 |

Group1

| LV6 |
| LV7 |

Group10

| LV8 |
| EMPTY |

Group11

## FIG. 17

211 INPUT SCREEN

51

52

53

| LOGICAL VOLUME 1 | LOGICAL VOLUME 2 | LOGICAL VOLUME 3 |
|---|---|---|
| RELIABILITY: LOW | RELIABILITY: LOW | RELIABILITY: LOW |
| DEGREE OF LOAD: HIGH | DEGREE OF LOAD: HIGH | DEGREE OF LOAD: LOW |
| CAPACITY REQUIRED : 20 GB | CAPACITY REQUIRED : 100 GB | CAPACITY REQUIRED : 100 GB |

FIG. 18

212 RESULT DISPLAY SCREEN

212a     212b     212c

**LOGICAL VOLUME 1**
DATA REQUIREMENT
RELIABILITY: LOW
DEGREE OF LOAD: HIGH
CAPACITY REQUIRED
: 20 GB

DRAWN RAID LEVEL IS
RAID0+1

**LOGICAL VOLUME 2**
DATA REQUIREMENT
RELIABILITY: LOW
DEGREE OF LOAD: HIGH
CAPACITY REQUIRED
: 100 GB

DRAWN RAID LEVEL IS
RAID0+1

**LOGICAL VOLUME 3**
DATA REQUIREMENT
RELIABILITY: LOW
DEGREE OF LOAD: LOW
CAPACITYREQUIRED
: 100 GB

DRAWN RAID  LEVEL IS
RAID5

**RAID GROUP 1**

RAID LEVEL 0+1

**RAID GROUP 2**

RAID LEVEL 5

212d     212e

## FIG. 19

EP 1 811 392 A1

LOGICAL VOLUME
ADDITION SETTING
PROCESS

S31

SET AFFINITY
GROUPS

S32

SET ACCESS
PATHS

S33

SET MULTIPATHS

S34

SET CLUSTER
RESOURCES

S35

SET MIRROR
VOLUME

END

FIG. 20

SETTING IN SERVER

SERVER GROUP

SET MIRROR VOLUME

310b

VOLUME MANAGEMENT SECTION

M0    M1

SERVER A    SERVER B

310    320

REGISTER CLUSTER RESOURCES

mplb0    mplb1    mplb2    mplb3

SET MULTIPATHS

LUN 0    LUN 1    LUN 2    LUN 3

TWO PATHS

TWO PATHS    TWO PATHS

TWO PATHS    SET ACCESS PATHS

STORAGE GROUP

62

GENERATE RAID GROUPS

STORAGE POOL    61

450a

450b    460a    460b

461

Affinity Group0    Affinity Group1    Affinity Group10    Affinity Group11

LV 0    LV 10

LV 1    LV 11    462

451    452    463

ADD LV0, LV1, LV12, AND LV13

453    LV 2    LV 12

LV0    LV1    LV12    LV13

454    LV 3    LV 13

464

RAID APPARATUS α    RAID APPARATUS β

FIG. 21

EP 1 811 392 A1

FIG. 22

181 AFFINITY GROUP INFORMATION

RAID APPARATUS α

AFFINITY GROUP STRUCTURE DATA

**AffinityGroup0** (181a)

| HOST LUN | LV(LogicalVolume) |
|---|---|
| 0 | 0 |
| 1 | 1 |

**AffinityGroup1** (181b)

| HOST LUN | LV(LogicalVolume) |
|---|---|
| 0 | 0 |
| 1 | 1 |

RAID APPARATUS β

**AffinityGroup10** (181c)

| HOST LUN | LV(LogicalVolume) |
|---|---|
| 2 | 12 |
| 3 | 13 |

**AffinityGroup11** (181d)

| HOST LUN | LV(LogicalVolume) |
|---|---|
| 2 | 12 |
| 3 | 13 |

181e MULTIPATH STRUCTURE DATA

| MULTIPATH INSTANCE NUMBER | LUN |
|---|---|
| mplb0 | 0 |
| mplb1 | 1 |
| mplb2 | 2 |
| mplb3 | 3 |

# FIG. 23

181f  MIRROR VOLUME STRUCTURE DATA

| MIRROR VOLUME NUMBER | CONSTITUENT DISK NUMBER |
|----------------------|-------------------------|
| M0                   | mplb0,mplb2             |
| M1                   | mplb1,mplb3             |

# FIG. 24

<table>
<tr><td colspan="2" align="center">**INTERNATIONAL SEARCH REPORT**</td><td>International application No.<br>PCT/JP2004/014730</td></tr>
</table>

A.  CLASSIFICATION OF SUBJECT MATTER
    Int.Cl⁷ G06F13/10, G06F12/00, G06F3/06

According to International Patent Classification (IPC) or to both national classification and IPC

B.  FIELDS SEARCHED

Minimum documentation searched (classification system followed by classification symbols)
    Int.Cl⁷ G06F13/10, G06F12/00, G06F3/06

Documentation searched other than minimum documentation to the extent that such documents are included in the fields searched
    Jitsuyo Shinan Koho        1922-1996   Toroku Jitsuyo Shinan Koho    1994-2004
    Kokai Jitsuyo Shinan Koho   1971-2004   Jitsuyo Shinan Toroku Koho    1996-2004

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| Y | JP 2002-222061 A  (Hitachi, Ltd.),<br>09 August, 2002 (09.08.02),<br>Full text; all drawings<br>& US 2002/0099914 A1    & EP 1227402 A2 | 1-11 |
| Y | JP 2003-316618 A  (Hitachi, Ltd.),<br>07 November, 2003 (07.11.03),<br>Par No. [0074]<br>& US 2003/0204701 A1 | 1-11 |
| A | JP 2001-350707 A  (Hitachi, Ltd.),<br>21 December, 2001 (21.12.01),<br>Full text; all drawings<br>& US 2001/0049779 A1    & EP 162534 A2 | 1-11 |

☒  Further documents are listed in the continuation of Box C.   ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>06 December, 2004 (06.12.04) | Date of mailing of the international search report<br>21 December, 2004 (21.12.04) |
|---|---|
| Name and mailing address of the ISA/<br>Japanese Patent Office | Authorized officer |
| Facsimile No. | Telephone No. |

Form PCT/ISA/210 (second sheet) (January 2004)

<table>
<tr><th colspan="2" rowspan="2">INTERNATIONAL SEARCH REPORT</th><th>International application No.</th></tr>
<tr><td>PCT/JP2004/014730</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-140930 A (Hitachi, Ltd.), 16 May, 2003 (16.05.03), Full text; all drawings & US 2003/0084076 A1 | 1-11 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000020245 A
- JP 9292954 A